# EUROPEAN PATENT APPLICATION

(11) **EP 4 447 551 A1**
(43) Date of publication of application: **16.10.2024**
(21) Application number: 22914074.4
(22) Date of filing: 06.12.2022
(51) Int. Cl.: H04W 36/08

(54) **CONDITIONAL HANDOVER METHOD, DEVICE, AND SYSTEM**

(30) Priority: 31.12.2021 CN 202111679223
(71) Applicant: Huawei Technologies Co., Ltd., Shenzhen, Guangdong 518129 (CN)
(72) Inventor: FANG, Yuzhe, Shenzhen, Guangdong 518129 (CN); PENG, Wenjie, Shenzhen, Guangdong 518129 (CN)
(74) Representative: Maiwald GmbH
(86) International application number: PCT/CN2022/136807
(87) International publication number: WO 2023/124819

(57) **Abstract**

Embodiments of this application provide a conditional handover method, a device, and a system, and relate to the communication field. The method includes: receiving a first radio resource control RRC reconfiguration message, where the first RRC reconfiguration message includes RRC configurations and CHO execution conditions of a plurality of candidate target base stations, the plurality of candidate target base stations include base stations that are 1 to N hops away from a serving base station, 1 < N ≤ T, T is a hop count from a farthest base station to the serving base station on a moving path, and both N and T are positive integers; determining a target base station based on the first RRC reconfiguration message in a process of moving along the moving path, where the moving path is a specified path on which movement is to be performed, and the target base station is one of the plurality of candidate target base stations; and performing handover to the target base station. This can resolve a problem that a mobile terminal is disconnected because the mobile terminal has not been handed over to a base station in time, and ensure that the mobile terminal can continuously obtain a base station service in a moving process.

## Description

This application claims priority to Chinese Patent Application No. 202111679223.1, filed with the China National Intellectual Property Administration on December 31, 2021 and entitled "CONDITIONAL HANDOVER METHOD, DEVICE, AND SYSTEM", which is incorporated herein by reference in its entirety.

### TECHNICAL FIELD

This application relates to the field of communication technologies, and in particular, to a conditional handover (Conditional handover, CHO) method, a device, and a system.

### BACKGROUND

In today's society, performance of a terminal is continuously improved, and a moving speed of the terminal is also increasingly enhanced. Therefore, many terminals are increasingly widely used in production and life by virtue of flexibility, convenience, stability, and the like.

As the moving speed of the terminal increases, after the terminal leaves a current serving base station, the terminal usually moves out of a service range of a next serving base station before being handed over to the next serving base station. As a result, the terminal is disconnected, and normal communication of the terminal is affected.

### SUMMARY

This application provides a conditional handover method, a device, and a system, to resolve a problem that a mobile terminal is disconnected because the mobile terminal has not been handed over to a base station in time, and ensure that the mobile terminal can continuously obtain a base station service in a moving process.

According to a first aspect, an embodiment of this application provides a conditional handover CHO method, including: receiving a first radio resource control RRC (Radio resource control, RRC) reconfiguration message, where the first RRC reconfiguration message includes RRC configurations and CHO execution conditions of a plurality of candidate target base stations, the plurality of candidate target base stations include base stations that are 1 to N hops away from a serving base station, 1 < N ≤ T, T is a hop count from a farthest base station to the serving base station on a moving path, and both N and T are positive integers; determining a target base station based on the first RRC reconfiguration message in a process of moving along the moving path, where the moving path is a specified path on which movement is to be performed, and the target base station is one of the plurality of candidate target base stations; and performing handover to the target base station.

In this embodiment of this application, a terminal may receive the RRC configurations and the CHO execution conditions of the plurality of candidate target base stations that are 1 to N hops away from the serving base station and that are on the moving path of the terminal. The RRC configurations and the CHO execution conditions are carried in the first RRC reconfiguration message and sent to the terminal by the serving base station. The terminal may determine the target base station based on the first RRC reconfiguration message in a process of moving along the moving path, and may determine a to-be-accessed target base station based on a CHO execution condition and an RRC configuration like signal strength and coverage of a candidate target base station.

After leaving the serving base station, the terminal is handed over to a candidate target base station on the moving path hop by hop. Therefore, even if the terminal fails to access a target base station one hop away from the serving base station, the terminal still has RRC configurations and CHO execution conditions of candidate target base stations that are two hops away from the serving base station. Therefore, the terminal may select a target base station from the candidate target base stations two hops away from the serving base station, change, in time, a base station that the terminal is to access, and continuously obtain services of base stations on the moving path, to resolve a problem that the terminal is disconnected because the terminal fails to be handed over to a base station in time.

In a possible implementation, the determining a target base station based on the first RRC reconfiguration message in a process of moving along the moving path includes: determining the target base station one hop away from the serving base station based on the first RRC reconfiguration message in the process of moving along the moving path; and if it is determined that handover continues, determining, based on the first RRC reconfiguration message, a candidate target base station two hops away from the serving base station as the target base station.

In the process of moving along the moving path, the terminal determines, based on the first RRC reconfiguration message, the target base station one hop away from the serving base station. If the terminal has not accessed the target base station one hop away from the serving base station, but has flew away from a service coverage of the target base station one hop away from the serving base station, the terminal may select, in time based on the RRC configurations and the CHO execution conditions that are of the candidate target base stations two hops away from the serving base station and that are in the first RRC reconfiguration message, a to-be-accessed base station from the candidate target base stations two hops away from the serving base station, as the target base station, and access the target base station.

The accessing the target base station includes: The terminal sends an RRC reconfiguration complete message to the serving base station; the terminal executes a CHO execution condition of the target base station; the terminal accesses the target base station based on an RRC configuration of the target base station; and the terminal sends the RRC reconfiguration complete message to the target base station.

In a possible implementation, after the performing handover to the target base station, the method further includes: storing the RRC configurations and the CHO execution conditions of the plurality of candidate target base stations.

In this embodiment of this application, the terminal may obtain RRC configurations and CHO execution conditions of a plurality of hops of candidate target base stations based on an RRC reconfiguration message. Therefore, after the terminal is handed over to a base station and accesses a target base station, RRC configurations and CHO execution conditions of a plurality of subsequent hops of candidate target base stations may still provide basis for selecting a target base station for subsequent movement. Therefore, the RRC configurations and the CHO execution conditions of the plurality of candidate target base stations need to be stored.

In a possible implementation, the method further includes: after accessing a target base station N hops away from the serving base station, receiving a second RRC reconfiguration message sent by the target base station N hops away from the serving base station, where the second RRC reconfiguration message includes RRC configurations and CHO execution conditions of a plurality of candidate target base stations that are N + 1 to M hops away from the serving base station, N + 1 < M ≤ T, and M is a positive integer; and determining the target base station based on the second RRC reconfiguration message.

The moving path of the terminal includes a plurality of hops of candidate target base stations. Because the serving base station sets a time limit or a hop count limit for collected RRC configurations and CHO execution conditions, the first RRC reconfiguration message provided by the serving base station for the terminal may not cover RRC configurations and CHO execution conditions of all hops of candidate target base stations on the moving path. Therefore, when the terminal receives the first RRC reconfiguration message and flies to the target base station N hops away from the serving base station, no related information of a plurality of subsequent hops of candidate target base stations is available. The received second RRC reconfiguration message includes the RRC configurations and the CHO execution conditions of the plurality of candidate target base stations that are N + 1 to M hops away from the serving base station. Therefore, the terminal may continue to determine, based on the second RRC reconfiguration message, the target base station from the plurality of candidate target base stations that are N + 1 to M hops away from the serving base station.

In a possible implementation, after the terminal is handed over to the target base station, the method further includes: receiving a first message sent by the target base station, to perform, based on the first message, handover to a subsequently determined target base station to be handed over to, where the first message includes at least one of the following: a trigger moment, a trigger condition, a leave condition, or signal strength of the target base station.

According to a second aspect, an embodiment of this application provides a conditional handover CHO method, including: sending handover request messages to a plurality of candidate target base stations based on a moving path, where the moving path is a specified path on which movement is to be performed, the plurality of candidate target base stations include base stations that are 1 to N hops away from a serving base station, 1 < N ≤ T, T is a hop count from a farthest base station to the serving base station on the moving path, and N and T are positive integers; receiving handover request responses, where the handover request responses include radio resource control RRC configurations of the plurality of candidate target base stations; and sending a first RRC reconfiguration message to a terminal, where the first RRC reconfiguration message includes the RRC configurations and obtained CHO execution conditions of the plurality of candidate target base stations.

The serving base station may send the handover request messages to the candidate target base stations on the moving path based on the moving path of the terminal, where the candidate target base stations include the base stations that are one to N hops away from the serving base station. There may be a plurality of candidate target base stations that are one hop away from the serving base station, there may also be a plurality of candidate target base stations that are two hops away from the serving base station, and the like. T is a number of hops from a farthest base station to the serving base station on the moving path, and the serving base station sends the handover request messages to the candidate target base stations that are less than or equal to N hops, that is, 1 to N hops, away from the serving base station, to notify the candidate target base stations that the terminal may access the candidate target base stations. After the candidate target base stations send the handover request responses based on various situations, the serving base station correspondingly adds CHO execution conditions for handover to the candidate target base stations based on the RRC configurations carried in the handover request responses, to obtain the first RRC reconfiguration message, where the first RRC reconfiguration message includes the RRC configurations of the plurality of candidate target base stations and the CHO execution conditions that are correspondingly added by the serving base station and that are for the handover from the serving base station to the candidate target base stations. Alternatively, the serving base station obtains the first RRC reconfiguration message based on the RRC configurations that are of the corresponding target base stations and that are obtained from the handover request responses and CHO execution conditions between base stations, where the first RRC reconfiguration message includes the RRC configurations and the CHO execution conditions that are of the plurality of candidate target base stations and that are summarized by the serving base station. The first RRC reconfiguration message is sent to the terminal, so that in a process of moving along the moving path, the terminal determines a target base station based on the first RRC reconfiguration message, and is handed over to the target base station, where the target base station is one of the plurality of candidate target base stations.

Optionally, the handover request message carries the moving path.

Because the moving path is sent by the terminal to the serving base station, and no other candidate target base station has the moving path, the serving base station adds the moving path to the handover request messages, so that the candidate target base stations can obtain the moving path of the terminal. If the candidate target base stations need to determine whether the candidate target base stations are capable of serving the terminal, the candidate target base stations may perform determining based on the moving path.

In a possible implementation, the handover request responses further include the CHO execution conditions of the plurality of candidate target base stations; and the sending handover request messages to a plurality of candidate target base stations based on a moving path and the receiving handover request responses include: The serving base station sends the handover request message to a candidate target base station one hop away from the serving base station on the moving path; receives a handover request response sent by the candidate target base station one hop away from the serving base station, where the handover request response includes an RRC configuration of the candidate target base station one hop away from the serving base station, and an RRC configuration and a CHO execution condition that are of a candidate target base station capable of serving the terminal on the moving path and that are received by the candidate target base station one hop away from the serving base station; and correspondingly adds a CHO execution condition from the serving base station to the candidate target base station one hop away, and the received RRC configuration and CHO execution condition, to obtain the first RRC reconfiguration message.

After receiving a handover request message sent by a previous-hop base station of each hop candidate target base station, if each hop of candidate base station determines that the candidate target base station is capable of serving the terminal, each hop candidate base station sends an RRC configuration of the candidate target base station to the previous-hop base station, and the previous-hop base station adds a CHO execution condition from the candidate target base station to a next hop candidate target base station. If the previous-hop base station is the serving base station, the serving base station obtains the first RRC configuration message after adding the CHO execution condition. If the previous-hop base station is a candidate target base station, the previous-hop base station obtains a handover request response based on an RRC configuration to which a CHO execution condition of the previous-hop base station is added, and then sends the handover request response to a previous-hop base station of the previous-hop base station.

In a possible implementation, the handover request responses further include the CHO execution conditions of the plurality of candidate target base stations; and the sending handover request messages to a plurality of candidate target base stations based on a moving path and the receiving handover request responses include: generating at least one service sequence based on a service sequence of the plurality of candidate target base stations that serve the terminal on the moving path; sending, based on the service sequence, the handover request message to a candidate target base station one hop away from the serving base station, where the handover request message carries a service sequence corresponding to the candidate target base station one hop away from the serving base station; receiving the handover request response sent by the candidate target base station one hop away from the serving base station, where the handover request response includes an RRC configuration of the candidate target base station one hop away from the serving base station, and an RRC configuration and a CHO execution condition of a candidate target base station in the service sequence received by the candidate target base station one hop away from the serving base station; and correspondingly adding a CHO execution condition from the serving base station to the candidate target base station one hop away, and the received RRC configuration and CHO execution condition, to obtain the first RRC reconfiguration message.

The serving base station may calculate a plurality of service sequences based on the moving path, and then send a handover request message to a next-hop candidate target base station of the serving base station based on a sequence of the service sequences, so that each hop of candidate target base station sends a handover request message to a next-hop candidate target base station corresponding to the candidate target base station based on the service sequence.

In a possible implementation, the sending handover request messages to a plurality of candidate target base stations based on a moving path includes: obtaining, through calculation based on the moving path, the plurality of candidate target base stations capable of serving the terminal; and sending the handover request messages to the plurality of calculated candidate target base stations.

The serving base station may send the handover request message to the next-hop candidate target base station of the serving base station in the foregoing implementation, or may send the message to a plurality of candidate target base stations of a plurality of hops that are calculated by the serving base station and capable of serving the terminal on the moving path.

In a possible implementation, the sending handover request messages to a plurality of candidate target base stations based on a moving path and the receiving handover request responses sent by the plurality of candidate target base stations include: sending the handover request messages to the plurality of candidate target base stations based on the moving path; and receiving the handover request responses sent by the plurality of candidate target base stations capable of serving the terminal, where whether the plurality of candidate target base stations are capable of serving the terminal is determined by the plurality of candidate target base stations based on the moving path.

The serving base station may send the messages to the plurality of calculated candidate target base stations capable of serving the terminal, and may also send the handover request messages to the plurality of candidate target base stations of a plurality of hops on the moving path. The candidate target base stations that receive the handover request messages determine, based on configurations of the candidate target base stations, whether the candidate target base stations are capable of serving the terminal, and if the candidate target base stations are capable of serving the terminal, the candidate target base stations send handover request responses carrying RRC configurations of the candidate target base stations to the serving base station.

Optionally, before the sending a first RRC reconfiguration message to a terminal, the method further includes: adding the CHO execution conditions corresponding to the RRC configurations of the plurality of candidate target base stations, to obtain the first RRC reconfiguration message.

If the serving base station receives an RRC configuration of each of the plurality of hops of candidate target base stations, the serving base station correspondingly adds, to an RRC of each candidate target base station, a CHO execution condition for handover to the candidate target base station, to obtain the first RRC reconfiguration message. If the serving base station receives RRC configurations that are nested with CHO execution conditions and that are of the plurality of hops of candidate target base stations, the serving base station only needs to correspondingly add a CHO execution condition between the serving base station and the candidate target base station one hop away from the serving base station, to obtain the first RRC reconfiguration message.

In a possible implementation, the handover request message carries a preset hop count, the preset hop count is reduced by one each time the preset hop count is received by one candidate target base station, and when the preset hop count is reduced to zero, the candidate target base station no longer sends a handover request message to a next-hop candidate target base station, and sends the handover request response to a previous-hop base station; or if the candidate target base station fails to find an eligible next-hop candidate target base station, the preset hop count returns to zero, so that the candidate target base station sends the handover request response to the previous-hop base station.

In a possible implementation, the handover request message carries an estimated timeout moment, so that the candidate target base station compares a receiving moment of receiving the handover request message by the candidate target base station with the estimated timeout moment, and if the receiving moment exceeds the estimated timeout moment, the candidate target base station confirms timeout, no longer sends a handover request message to a next-hop candidate target base station, and sends the handover request response to a previous-hop base station; or when the receiving moment does not exceed the estimated timeout moment and the candidate target base station fails to find an eligible next-hop candidate target base station, the candidate target base station sends the handover request response to the previous-hop base station.

In a possible implementation, after the sending a first RRC reconfiguration message to a terminal, the method further includes: if a successful handover message sent by a target base station is received, determining that the terminal has been handed over to the target base station; and sending a second message to the target base station, so that the target base station determines, based on the second message, a candidate target base station to which the terminal subsequently is handed over on the moving path, where the second message includes an ID of the candidate target base station to which the terminal subsequently is handed over and RRC configuration information provided for the terminal.

Optionally, the RRC configuration information provided for the terminal is obtained based on the RRC configuration in the handover request response.

According to a third aspect, an embodiment of this application provides a conditional handover CHO method, including: receiving a handover request message, where the handover request message is sent based on a moving path, and the moving path is a specified path on which movement is to be performed; generating a handover request response for the handover request message, where the handover request response includes at least one radio resource control RRC configuration; and sending the handover request response.

After receiving the handover request message, a candidate target base station correspondingly adds a CHO execution condition to an RRC configuration of a next-hop candidate target base station in the message, generates the handover request response, and then sends the handover request response to a previous-hop base station. The previous-hop base station may be a serving base station or a candidate target base station.

In a possible implementation, the handover request message carries the moving path; and the receiving a handover request message, the generating a handover request response for the handover request message, and the sending the handover request response include: receiving the handover request message sent by a previous-hop base station, where the previous-hop base station is a serving base station or a candidate target base station; if it is determined, based on the moving path, that a service can be provided for a terminal, determining a next-hop candidate target base station based on the moving path, and sending the handover request message to the next-hop candidate target base station; if a handover request response sent by the next-hop candidate target base station is received, correspondingly adding, based on the next-hop handover request response and an RRC configuration of a candidate base station, a CHO execution condition from the candidate base station to the next-hop candidate target base station, to obtain the handover request response; or if no handover request response sent by the next-hop candidate target base station is received, obtaining the handover request response based on the RRC configuration of the candidate base station; and sending the handover request response to the previous-hop base station.

In a possible implementation, the handover request message carries a service sequence generated by a serving base station based on the moving path; and the receiving a handover request message, the generating a handover request response for the handover request message, and the sending the handover request response include: receiving the handover request message sent by a previous-hop base station, where the previous-hop base station is the serving base station or a candidate target base station; determining a next-hop candidate target base station based on the service sequence, and sending the handover request message to the next-hop candidate target base station; if a next-hop handover request response sent by the next-hop candidate target base station is received, correspondingly adding, based on the next-hop handover request response and an RRC configuration of a candidate base station, a CHO execution condition from the candidate base station to the next-hop candidate target base station, to obtain the handover request response; or if no next-hop handover request response fed back by the next-hop candidate target base station is received, obtaining the handover request response based on the RRC configuration of the candidate base station; and sending the handover request response to the previous-hop base station.

The foregoing two possible implementations are implementations in which the serving base station sends a handover request message to a candidate target base station one hop away from the serving base station, and each hop of candidate target base station sends a handover request message to a next-hop candidate target base station, collects an RRC configuration of the next-hop candidate target base station, correspondingly adds a CHO execution condition of the candidate target base station to obtain a handover request response, and sends the handover request response back to the serving base station hop by hop.

In a possible implementation, the handover request message carries the moving path; and the receiving a handover request message, the generating a handover request response for the handover request message, and the sending the handover request response include: receiving the handover request message sent by a serving base station; if it is determined, based on the moving path, that a capability of serving a terminal is available, obtaining the handover request response based on an RRC configuration of a candidate base station; and sending the handover request response to the serving base station.

Regardless of whether the serving base station sends the handover request message based on the moving path or sends the handover request message based on the candidate base station capable of serving the terminal and that is calculated by the serving base station, after the candidate target base station receives the handover request message, the candidate target base station needs to obtain a handover request response based on an RRC configuration of the candidate target base station, and send the handover request response to the serving base station.

In a possible implementation, after the receiving the handover request message sent by a previous-hop base station, the method further includes: if it is determined that there is no next-hop candidate target base station that meets a handover condition, generating the handover request response, where the handover request response includes the RRC configuration of the candidate base station.

In this embodiment of this application, when a candidate target base station sends a handover request message to a next-hop candidate target base station on the moving path hop by hop, if it is determined that there is no next-hop candidate target base station that meets a handover condition, for example, there is no next-hop candidate target base station on the moving path, the candidate target base station generates a handover request response, where the handover request response includes an RRC configuration of the candidate target base station, and sends the handover request response to a previous-hop base station.

In a possible implementation, the sending the handover request message includes: if the handover request message carries a preset hop count, and the preset hop count is not zero after the handover request message is received, sending the handover request message to the next-hop candidate target base station, where the preset hop count is reduced by one each time the preset hop count is received by one candidate target base station; or if the handover request message carries an estimated timeout moment and a receiving moment of receiving the handover request message does not exceed the estimated timeout moment, sending the handover request message to the next-hop candidate target base station.

Optionally, the handover request message carries a preset hop count, and after the receiving a handover request message, the method further includes: if the preset hop count is zero after the handover request message is received, generating the handover request response, where the handover request response includes the RRC configuration of the candidate base station; or if the preset hop count is not zero after the handover request message is received, and it is determined that there is no next-hop candidate target base station that meets a handover condition, returning the preset hop count to zero, and generating the handover request response.

Optionally, the handover request message carries an estimated timeout moment; and after the receiving a handover request message, the method further includes: if a receiving moment of receiving the handover request message exceeds the estimated timeout moment, generating the handover request response; or if the receiving moment does not exceed the estimated timeout moment, and it is determined that there is no next-hop candidate target base station that meets a handover condition, generating the handover request response.

Because a plurality of hops of candidate target base stations are distributed on some moving paths, after the serving base station sends the handover request messages, if no limitation is set, it cannot be determined how long the serving base station should wait to determine that there is no suitable candidate target base station, or time is too long, the terminal has left the serving base station, but an RRC configuration and a CHO execution condition are still not provided to the terminal in time. Therefore, a hop count limit and a time limit may be specified to be carried in the handover request message. The candidate target base station determines whether to continue to search for a next-hop candidate target base station of the candidate target base station based on limitation conditions such as whether the hop count is zero and whether the receiving moment exceeds the estimated timeout moment when the handover request message is received. In this way, it can be ensured that the handover request response is sent back to the serving base station within time controllable by the serving base station.

In a possible implementation, the handover request message carries the moving path on which a terminal moves; and after the sending the handover request response, the method further includes: if the terminal performs accessing, sending a successful handover message to a next-hop target base station on the moving path, where the successful handover message indicates that the terminal has completed the accessing; and determining, based on the moving path, the next-hop target base station as a base station that the terminal is to access.

In a possible implementation, after the sending the handover request response, the method further includes: if the successful handover message sent by a previous-hop target base station is received, and the preset hop count is zero or the receiving moment exceeds the estimated timeout moment, sending handover request messages to a plurality of candidate target base stations based on the moving path, where the plurality of candidate target base stations include base stations that are N + 1 to M hops away from the serving base station, N + 1 < M ≤ T, T is a hop count from a farthest base station to the serving base station on the moving path, and N, M, and T are positive integers; receiving handover request responses, where the handover request responses include RRC configurations and CHO execution conditions of a plurality of candidate target base stations that are N + 2 to M hops away from the serving base station, and an RRC configuration of at least one candidate target base station N + 1 hops away from the serving base station; correspondingly adding, to the RRC configuration of the at least one candidate target base station N + 1 hops away from the serving base station, a CHO execution condition of handover to the candidate base station; obtaining a second RRC reconfiguration message based on the RRC configuration and the CHO execution condition; and if the terminal performs accessing, sending the second RRC reconfiguration message to the terminal.

Among candidate target base stations in this embodiment of this application, it is assumed that the terminal has determined to access a base station A, and a next-hop target base station of the base station A is a base station B. After the terminal accesses the base station A, the base station B may receive a successful handover message. In this case, the base station B determines, based on a preset hop count or an estimated timeout moment obtained when the base station B previously receives a handover request message, whether the base station B needs to recollect an RRC configuration and a CHO execution condition of a subsequent candidate target base station for the terminal. If the preset hop count obtained when the base station B previously receives the handover request message is reduced to zero, or a receiving moment of receiving the handover request message exceeds the estimated timeout moment, the base station B determines that the base station B needs to provide the terminal with the RRC configuration and the CHO execution condition of the subsequent candidate target base station, and sends handover request messages to a plurality of candidate target base stations based on the moving path. After obtaining handover request responses sent by the subsequent base stations, the base station B may obtain the following information: the RRC configurations and the CHO execution conditions that are carried in the handover request response and that are of the plurality of candidate target base stations N + 2 to M hops away from the serving base station, and the RRC configuration of the at least one candidate target base station N + 1 hops away from the serving base station. The base station B, namely, a base station N hops away from the serving base station, correspondingly adds a CHO execution condition to an RRC configuration of a next-hop candidate target base station, namely, the at least one candidate target base station N + 1 hops away from the serving base station, of the base station B. The base station B generates the second RRC reconfiguration message based on all RRC configurations and CHO execution conditions, including the RRC configurations and the CHO execution conditions that are carried in the handover request response and that are added by the base station B. After accessing the base station B, the terminal sends the second RRC reconfiguration message to the terminal, so that the terminal obtains configuration information and a handover condition of a subsequent candidate target base station on the moving path, so that the terminal selects to access a subsequent target base station during subsequent movement.

In a possible implementation, after the sending the handover request response, the method further includes: if a second message is received, determining the next-hop candidate target base station based on the second message, where the second message includes an ID of a candidate target base station to which the terminal subsequently is handed over and RRC configuration information provided for the terminal; and sending, to the terminal, a first message updated based on the second message, where the first message includes at least one of the following: a trigger moment, a trigger or leave condition, or signal strength of a target base station.

When each hop of candidate target base station receives a handover request message sent by the serving base station and sends a handover request response to the serving base station, each hop of candidate target base station does not know a situation of a next-hop candidate target base station of the serving base station. Therefore, after the terminal successfully performs handover, the serving base station sends a second message to a target base station selected by the terminal for access, where the second message includes an ID of a candidate target base station for subsequent handover and RRC configuration information provided for the terminal. Therefore, the target base station may determine a situation of the candidate target base station for subsequent handover, and may also include, based on the second message, a CHO execution condition from the target base station to the next-hop candidate target base station corresponding to an RRC configuration of a next-hop candidate target base station, to obtain a first message, and send the first message to the terminal, so that the terminal updates a handover condition based on the first message.

Optionally, the RRC configuration information provided for the terminal is obtained based on the RRC configuration in the handover request response.

According to a fourth aspect, an embodiment of this application provides a terminal device, including a processor and a memory, where
the memory is configured to store computer instructions, and when the processor executes the computer instructions, the terminal device is enabled to perform the conditional handover CHO method provided in the first aspect.

According to a fifth aspect, an embodiment of this application provides a serving base station, including a processor and a memory, where
the memory is configured to store computer instructions, and when the processor executes the computer instructions, the first network node is enabled to perform the conditional handover CHO method provided in the second aspect.

According to a sixth aspect, an embodiment of this application provides a candidate target base station. The candidate target base station includes a processor and a memory. The memory is configured to store computer instructions, and when the processor executes the computer instructions, the relay terminal device is enabled to perform the conditional handover CHO method provided in the third aspect.

According to a seventh aspect, an embodiment of this application provides a communication system, including a terminal device according to the fourth aspect, a serving base station according to the fifth aspect, and at least one candidate target base station according to the sixth aspect.

According to an eighth aspect, an embodiment of this application provides a conditional handover CHO apparatus, including: a first receiving module, configured to receive a first radio resource control RRC reconfiguration message, where the first RRC reconfiguration message includes RRC configurations and CHO execution conditions of a plurality of candidate target base stations, the plurality of candidate target base stations include base stations that are 1 to N hops away from a serving base station, 1 < N ≤ T, T is a hop count from a farthest base station to the serving base station on a moving path, and both N and T are positive integers; a first processing module, configured to, determine a target base station based on the first RRC reconfiguration message in a process of moving along the moving path, where the moving path is a specified path on which movement is to be performed, and the target base station is one of the plurality of candidate target base stations; and the first processing module is further configured to perform handover to the target base station.

In a possible implementation, the first processing module is specifically configured to: determine the target base station one hop away from the serving base station based on the first RRC reconfiguration message in the process of moving along the moving path; and if it is determined that handover continues, determine, based on the first RRC reconfiguration message, a candidate target base station two hops away from the serving base station as the target base station.

In a possible implementation, the apparatus further includes: a first storage module, configured to store the RRC configurations and the CHO execution conditions of the plurality of candidate target base stations.

In a possible implementation, the first receiving module is further configured to: after a target base station N hops away from the serving base station is accessed, receive a second RRC reconfiguration message sent by the target base station N hops away from the serving base station, where the second RRC reconfiguration message includes RRC configurations and CHO execution conditions of a plurality of candidate target base stations that are N + 1 to M hops away from the serving base station, N + 1 < M ≤ T, and M is a positive integer; and the first processing module is further configured to determine a target base station based on the second RRC reconfiguration message.

In a possible implementation, the first receiving module is further configured to receive a first message sent by the target base station, to perform, based on the first message, handover to a subsequently determined target base station to be handed over to, where the first message includes at least one of the following: a trigger moment, a trigger condition, a leave condition, or signal strength of the target base station.

According to a ninth aspect, an embodiment of this application provides a conditional handover CHO apparatus, including: a second sending module, configured to send handover request messages to a plurality of candidate target base stations based on a moving path, where the moving path is a specified path on which movement is to be performed, the plurality of candidate target base stations include base stations that are 1 to N hops away from a serving base station, 1 < N ≤ T, T is a hop count from a farthest base station to the serving base station on the moving path, and N and T are positive integers; and a second receiving module, configured to receive handover request responses, where the handover request responses include radio resource control RRC configurations of the plurality of candidate target base stations; and the second sending module is further configured to send a first RRC reconfiguration message to a terminal, where the first RRC reconfiguration message includes the RRC configurations and obtained CHO execution conditions of the plurality of candidate target base stations.

Optionally, the handover request message carries the moving path.

In a possible implementation, the handover request responses further include the CHO execution conditions of the plurality of candidate target base stations; the second sending module is further configured to send the handover request message to a candidate target base station one hop away from the serving base station on the moving path; the second receiving module is further configured to receive a handover request response sent by the candidate target base station one hop away from the serving base station, where the handover request response includes an RRC configuration of the candidate target base station one hop away from the serving base station, and an RRC configuration and a CHO execution condition that are of a candidate target base station capable of serving the terminal on the moving path and that are received by the candidate target base station one hop away from the serving base station; and the apparatus further includes a second processing module, configured to correspondingly add a CHO execution condition from the serving base station to the candidate target base station one hop away, and the received RRC configuration and CHO execution condition, to obtain the first RRC reconfiguration message.

In a possible implementation, the handover request responses further include the CHO execution conditions of the plurality of candidate target base stations; the second processing module is further configured to generate at least one service sequence based on a service sequence of the plurality of candidate target base stations that serve the terminal on the moving path; the second sending module is further configured to send, based on the service sequence, the handover request message to a candidate target base station one hop away from the serving base station, where the handover request message carries a service sequence corresponding to the candidate target base station one hop away from the serving base station; the second receiving module is further configured to receive the handover request response sent by the candidate target base station one hop away from the serving base station, where the handover request response includes an RRC configuration of the candidate target base station one hop away from the serving base station, and an RRC configuration and a CHO execution condition of a candidate target base station in the service sequence received by the candidate target base station one hop away from the serving base station; and the second processing module is further configured to correspondingly add a CHO execution condition from the serving base station to the candidate target base station one hop away, and the received RRC configuration and CHO execution condition, to obtain the first RRC reconfiguration message.

In a possible implementation, the second processing module is further configured to obtain, through calculation based on the moving path, the plurality of candidate target base stations capable of serving the terminal; and the second sending module is further configured to send the handover request messages to the plurality of calculated candidate target base stations.

In a possible implementation, the second sending module is further configured to send the handover request messages to the plurality of candidate target base stations based on the moving path; and the second receiving module is further configured to receive the handover request responses sent by the plurality of candidate target base stations capable of serving the terminal, where whether the plurality of candidate target base stations are capable of serving the terminal is determined by the plurality of candidate target base stations based on the moving path.

In a possible implementation, the second processing module is further configured to add the CHO execution conditions corresponding to the RRC configurations of the plurality of candidate target base stations, to obtain the first RRC reconfiguration message.

In a possible implementation, the handover request message carries a preset hop count, the preset hop count is reduced by one each time the preset hop count is received by one candidate target base station, and when the preset hop count is reduced to zero, the candidate target base station no longer sends a handover request message to a next-hop candidate target base station, and sends the handover request response to a previous-hop base station; or if the candidate target base station fails to find an eligible next-hop candidate target base station, the preset hop count returns to zero, so that the candidate target base station sends the handover request response to the previous-hop base station.

The handover request message carries an estimated timeout moment, so that the candidate target base station compares a receiving moment of receiving the handover request message by the candidate target base station with the estimated timeout moment, and if the receiving moment exceeds the estimated timeout moment, the candidate target base station confirms timeout, no longer sends a handover request message to a next-hop candidate target base station, and sends the handover request response to a previous-hop base station; or when the receiving moment does not exceed the estimated timeout moment and the candidate target base station fails to find an eligible next-hop candidate target base station, the candidate target base station sends the handover request response to the previous-hop base station.

In a possible implementation, the second processing module is further configured to: if the second receiving module receives a successful handover message sent by a target base station, determine that the terminal has been handed over to the target base station; and the second sending module sends a second message to the target base station, so that the target base station determines, based on the second message, a candidate target base station to which the terminal subsequently is handed over on the moving path, where the second message includes an ID of the candidate target base station to which the terminal subsequently is handed over and RRC configuration information provided for the terminal.

Optionally, the RRC configuration information provided for the terminal is obtained based on the RRC configuration in the handover request response.

According to a tenth aspect, an embodiment of this application provides a conditional handover CHO apparatus, including: a third receiving module, configured to receive a handover request message, where the handover request message is sent based on a moving path, and the moving path is a specified path on which movement is to be performed; a third processing module, configured to generate a handover request response for the handover request message, where the handover request response includes at least one radio resource control RRC configuration; and a third sending module, configured to: send the handover request response.

In a possible implementation, the handover request message carries the moving path, and the third receiving module is further configured to receive the handover request message sent by a previous-hop base station, where the previous-hop base station is a serving base station or a candidate target base station; the third processing module is further configured to: if it is determined, based on the moving path, that a service can be provided for a terminal, determine a next-hop candidate target base station based on the moving path, and the third sending module sends the handover request message to the next-hop candidate target base station; the third processing module is further configured to: if the third receiving module receives a handover request response sent by the next-hop candidate target base station, correspondingly add, based on the next-hop handover request response and an RRC configuration of a candidate base station, a CHO execution condition from the candidate base station to the next-hop candidate target base station, to obtain the handover request response; or if the third receiving module does not receive a handover request response fed back by the next-hop candidate target base station, obtain the handover request response based on the RRC configuration of the candidate base station; and the third sending module is further configured to: send the handover request response to the previous-hop base station.

In a possible implementation, the handover request message carries a service sequence generated by a serving base station based on the moving path, and the third receiving module is further configured to receive the handover request message sent by a previous-hop base station, where the previous-hop base station is the serving base station or a candidate target base station; the third processing module is further configured to determine a next-hop candidate target base station based on the service sequence, and the third sending module sends the handover request message to the next-hop candidate target base station; the third processing module is further configured to: if the third receiving module receives a next-hop handover request response sent by the next-hop candidate target base station, correspondingly add, based on the next-hop handover request response and an RRC configuration of a candidate base station, a CHO execution condition from the candidate base station to the next-hop candidate target base station, to obtain the handover request response; or if the third processing module does not receive a next-hop handover request response fed back by the next-hop candidate target base station, obtain the handover request response based on the RRC configuration of the candidate base station; and the third sending module is further configured to send the handover request response to the previous-hop base station.

In a possible implementation, the handover request message carries the moving path, and the third receiving module is further configured to receive the handover request message sent by a serving base station; the third processing module is further configured to: if it is determined, based on the moving path, that a capability of serving a terminal is available, obtain the handover request response based on an RRC configuration of a candidate base station; and the third sending module is further configured to send the handover request response to the serving base station.

In a possible implementation, the third processing module is further configured to: if it is determined that there is no next-hop candidate target base station that meets a handover condition, generate the handover request response, where the handover request response includes the RRC configuration of the candidate base station.

In a possible implementation, the third sending module is specifically configured to: if the handover request message carries a preset hop count, and the preset hop count is not zero after the handover request message is received, send the handover request message to the next-hop candidate target base station, where the preset hop count is reduced by one each time the preset hop count is received by one candidate target base station; or if the handover request message carries an estimated timeout moment and a receiving moment of receiving the handover request message does not exceed the estimated timeout moment, send the handover request message to the next-hop candidate target base station.

Optionally, the handover request message carries a preset hop count, and the third sending module is specifically configured to: if the preset hop count is zero after the handover request message is received, generate the handover request response, where the handover request response includes the RRC configuration of the candidate base station; or if the preset hop count is not zero after the handover request message is received, and it is determined that there is no next-hop candidate target base station that meets a handover condition, return the preset hop count to zero, and generate the handover request response.

Optionally, the handover request message carries an estimated timeout moment; and the third sending module is specifically configured to: if a receiving moment of receiving the handover request message exceeds the estimated timeout moment, generate the handover request response; or if the receiving moment does not exceed the estimated timeout moment, and it is determined that there is no next-hop candidate target base station that meets a handover condition, generate the handover request response.

In a possible implementation, the handover request message carries the moving path on which a terminal moves; and the third sending module is further configured to: if the terminal performs accessing, send a successful handover message to a next-hop target base station on the moving path, where the successful handover message indicates that the terminal has completed the accessing; and determine, based on the moving path, the next-hop target base station as a base station that the terminal is to access.

In a possible implementation, if the third receiving module receives the successful handover message sent by a previous-hop target base station, and the third processing module determines that the preset hop count is zero or the receiving moment exceeds the estimated timeout moment, handover request messages are sent to a plurality of candidate target base stations based on the moving path, where the plurality of candidate target base stations include base stations that are N + 1 to M hops away from the serving base station, N + 1 < M ≤ T, T is a hop count from a farthest base station to the serving base station on the moving path, and N, M, and T are positive integers; the third receiving module is further configured to receive handover request responses, where the handover request responses include RRC configurations and CHO execution conditions of a plurality of candidate target base stations that are N + 2 to M hops away from the serving base station, and an RRC configuration of at least one candidate target base station N + 1 hops away from the serving base station; the third processing module is further configured to: correspondingly add, to the RRC configuration of the at least one candidate target base station N + 1 hops away from the serving base station, a CHO execution condition of handover to the candidate base station; and obtain a second RRC reconfiguration message based on the RRC configuration and the CHO execution condition; and the third sending module is further configured to: if the terminal performs accessing, send the second RRC reconfiguration message to the terminal.

In a possible implementation, if the third receiving module receives a second message, the third processing module determines the next-hop candidate target base station based on the second message, where the second message includes an ID of a candidate target base station to which the terminal subsequently is handed over and RRC configuration information provided for the terminal; and the third sending unit is further configured to send, to the terminal, a first message updated based on the second message, where the first message includes at least one of the following: a trigger moment, a trigger or leave condition, or signal strength of a target base station.

In a possible implementation, the RRC configuration information provided for the terminal is obtained based on the RRC configuration in the handover request response.

### BRIEF DESCRIPTION OF DRAWINGS

To describe the technical solutions in embodiments of this application more clearly, the following briefly introduces the accompanying drawings used in describing embodiments of this application. It is clear that the accompanying drawings in the following description show merely some embodiments of this application, and a person of ordinary skill in the art may still derive other drawings from these accompanying drawings without creative efforts.
FIG. 1 is a diagram of a communication system according to an embodiment of this application;
FIG. 2 is a flowchart of a conditional handover method according to an embodiment of this application;
FIG. 3 is a flowchart of another conditional handover method according to an embodiment of this application;
FIG. 4 is a flowchart of still another conditional handover method according to an embodiment of this application;
FIG. 5 is a diagram of a terminal device according to an embodiment of this application;
FIG. 6 is a diagram of a serving base station according to an embodiment of this application;
FIG. 7 is a diagram of a candidate target base station according to an embodiment of this application; and
FIG. 8 is a diagram of a communication system according to an embodiment of this application.

### DESCRIPTION OF EMBODIMENTS

The following clearly describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

The term "and/or" in this specification describes only an association relationship between associated objects and indicates that three relationships may exist. For example, A and/or B may represent the following cases: Only A exists, both A and B exist, and only B exists.

In the specification and claims in embodiments of this application, the terms "first", "second", and the like are intended to distinguish between different objects but do not indicate a particular order of the objects. For example, a first target object, a second target object, and the like are used for distinguishing between different target objects, but are not used for describing a specific order of the target objects.

In embodiments of this application, the word "example" or "for example" is used to represent giving an example, an illustration, or a description. Any embodiment or design scheme described as an "example" or "for example" in embodiments of this application should not be explained as being more preferred or having more advantages than another embodiment or design solution. Exactly, use of the word such as "example" or "for example" is intended to present a related concept in a specific manner.

In the descriptions of embodiments of this application, unless otherwise stated, "a plurality of" means two or more than two. For example, a plurality of processing units are two or more processing units, and a plurality of systems are two or more systems.

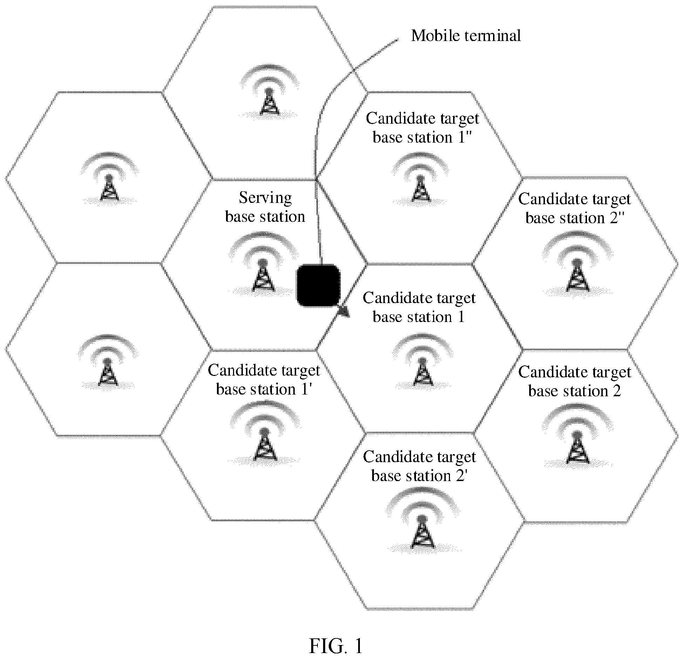

Before the technical solutions in embodiments of this application are described, a communication system in embodiments of this application is first described with reference to the accompanying drawings. FIG. 1 is a diagram of a communication system according to an embodiment of this application. The communication system includes a possible topology relationship between base stations. A movable terminal is handed over from a serving base station to one of candidate target base stations. As shown in FIG. 1, an example in which a base station is a 5G base station (next generation NodeB, gNB) in a 5G system is used. A candidate target base station 1 that is one hop away from a serving base station, namely, a source gNB, is a target gNB 1, a candidate target base station 1' is a target gNB 1', a candidate target base station 1" is a target gNB 1", and the like. Abase station two hops away from the source gNB may be a candidate target base station 2, namely, a target gNB 2, a candidate target base station 2' is a target gNB 2', a candidate target base station 2" is a target gNB 2", and the like. Similarly, another base station may also construct, based on this description manner, a network topology with different hops from the another base station. It should be noted that, during actual application, candidate target base stations are not limited by this example, and may be of a different network topology structure. A quantity of communication systems shown in FIG. 1 is only an adaptive example. This is not limited in this application.

As shown in FIG. 1, the communication system includes base stations and a terminal. The base stations may be one serving base station and at least one candidate target base station. Optionally, the communication system may further include another network entity like a network controller or a mobility management entity. This is not limited in embodiments of this application. A black arrow in FIG. 1 indicates that the terminal is ready to be handed over from the serving base station to the candidate target base station 1. The terminal and the serving base station have a communication connection, for example, send messages to each other through an air interface. In this case, the serving base station and a candidate target base station may perform signaling interaction through an Xn interface.

It should be understood that a base station in the communication system may be any base station with a wireless transceiver function or a chip that may be disposed on the base station. The base station includes but is not limited to an evolved NodeB (evolved NodeB, eNB), a radio network controller (radio network controller, RNC), a NodeB (NodeB, NB), a base station controller (base station controller, BSC), a base transceiver station (base transceiver station, BTS), and a home base station (for example, a home evolved NodeB, or a home NodeB, HNB), a baseband unit (baseband unit, BBU), an access point (access point, AP) in a wireless fidelity (wireless fidelity, Wi-Fi) system, a wireless relay node, a wireless backhaul node, a transmission point (transmission point, TP), a transmission and reception point (transmission and reception point, TRP), or the like, may be a 5G base station (next generation NodeB, gNB) or a transmission point (TRP or TP) in a 5G system, or one antenna panel or one group of antenna panels (including a plurality of antenna panels) of a base station in a 5G system, or may be a network node that constitutes a gNB or a transmission point, for example, a building base band unit (building base band unit, BBU) or a distributed unit (distributed unit, DU). Further, the base station may be a future communication system, for example, a base station of a 6G system or even a 7G system, or a base station with a similar function.

In some deployments, the gNB may include a central unit (central unit, CU) and a distributed unit (Distributed Unit, DU). The gNB may further include a radio unit (radio unit, RU). The CU implements some functions of the gNB, and the DU implements some functions of the gNB. For example, the CU implements functions of RRC and a packet data convergence protocol (packet data convergence protocol, PDCP) layer, and the DU implements functions of a radio link control (radio link control, RLC) layer, a media access control (media access control, MAC) layer, and a physical (physical, PHY) layer. Information at the RRC layer eventually becomes the information at the PHY layer, or is converted from the information at the PHY layer. Therefore, in this architecture, higher layer signaling, for example, RRC layer signaling or PDCP layer signaling, may also be considered as being sent by the DU or sent by the DU and the RU. It may be understood that the base station may be a CU node, a DU node, or a device including a CU node and a DU node. In addition, the CU may be classified as a base station in a radio access network, or the CU may be classified as a base station in a core network (core network, CN). This is not limited herein.

It should be further understood that a terminal in the communication system may also be referred to as user equipment (User Equipment, UE), an access terminal, a subscriber unit, a subscriber station, a mobile station, a mobile console, a remote station, a remote terminal, a mobile device, a user terminal, a terminal, a wireless communication device, a user agent, or a user apparatus. A terminal in embodiments of this application may be a mobile phone (mobile phone), a tablet computer (Pad), an unmanned aerial vehicle (Unmanned Aerial Vehicle, UAV), a computer with a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like. An application scenario is not limited in embodiments of this application. In this application, the foregoing terminal and the chip that may be disposed in the foregoing terminal are collectively referred to as the terminal.

It should be understood that for ease of understanding, FIG. 1 schematically shows a communication system. However, this should not constitute any limitation on this application. The communication system may alternatively include a larger quantity of network devices, or may include a larger quantity of terminal devices. The network devices that communicate with different terminal devices may be a same network device, or may be different network devices. Quantities of network devices that communicate with different terminal devices may be the same or may be different. This is not limited in this application.

In two methods described in embodiments of this application, a process in which a terminal is a UAV, a serving base station is a gNB, candidate target base stations are base stations distributed on a moving path, namely, a flight path of the UAV, and the UAV is handed over from the serving base station along the flight path to a target base station determined by the UAV from the candidate target base stations is used as an example. Handover of another terminal based on a moving path with reference to the following method also falls within the protection scope of this application. A topology structure of the candidate target base stations is shown in FIG. 1, but is not limited to a hop count range shown in FIG. 1.

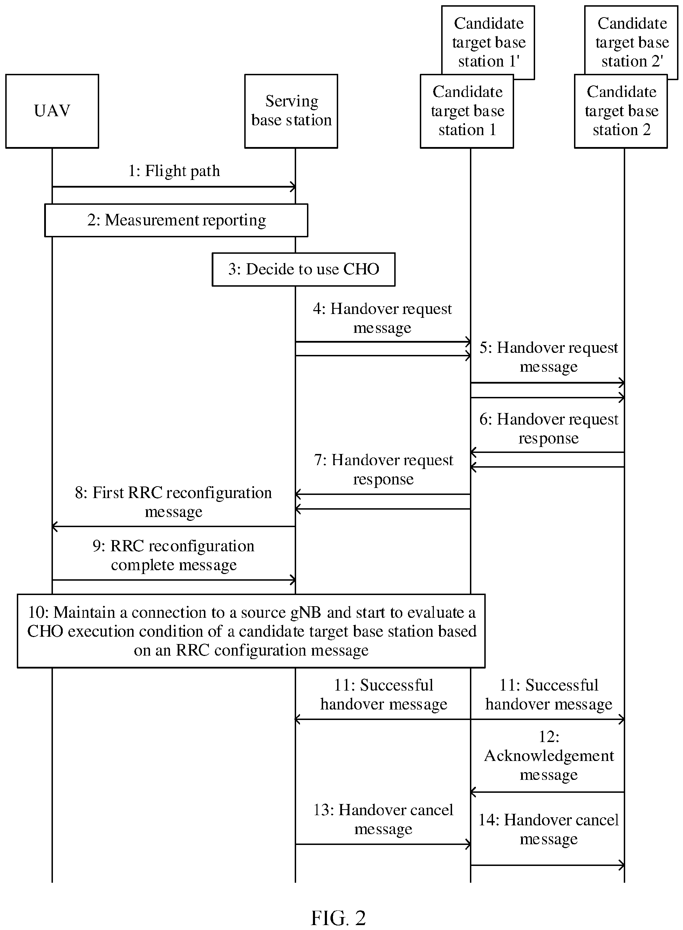

FIG. 2 is a flowchart of a conditional handover method according to an embodiment of this application. As shown in FIG. 2, a UAV may obtain handover information of N hops of candidate target base stations on a flight path at a serving base station, to select a target base station to perform handover to the target base station.

Step 1: The UAV delivers the flight path to the serving base station.

The flight path of the UAV is given, and candidate target base stations are a plurality of base stations that has network coverage in a direction of the flight path. Candidate target base stations that are one hop away from the serving base station, namely, the source gNB, are denoted as a target gNB 1, a target gNB 1', and a target gNB 1", candidate target base stations that are two hops away from the serving base station are denoted as a target gNB 2, a target gNB 2', and a target gNB 2", and the like.

Step 2: The UAV performs measurement reporting.

Step 3: The source gNB determines to use CHO.

After receiving reporting of the UAV, the source gNB determines to use the CHO. When the UAV meets a handover condition, the UAV is handed over to a selected target base station.

Steps 4 and 5: The source gNB sends handover requests based on the flight path.

The source gNB may send the handover requests based on the flight path in two manners, as shown in the following example:
In a first possible manner, the handover request messages carry the flight path. The source gNB sends the handover request messages to next-hop candidate target base stations, for example, the target gNB 1, the target gNB 1', and the target gNB 1", and then the next-hop candidate target base stations determine, based on information such as a handover condition, a network coverage range, and a configuration of the next-hop candidate target base stations, whether the candidate target base stations are capable of serving the UAV on the flight path of the UAV. If the target gNB 1 determines that the target gNB 1 are capable of serving the UAV on the flight path of the UAV, the target gNB 1 continues to send handover request messages carrying the flight path to the following next-hop candidate target base stations of the target gNB 1: the target gNB 2, the target gNB 2', and the target gNB 2". If the target gNB 1' and the target gNB 1" determine, based on the flight path, that the target gNB 1' and the target gNB 1" cannot serve the UAV, the target gNB 1' and the target gNB 1" may not send handover request responses to next-hop base stations of the target gNB 1' and the target gNB 1", and may send handover cancel messages to the source gNB, or may not send any message. If the source gNB receives the handover cancel messages or does not receive messages sent by the target gNB 1' and the target gNB 1" after timeout, the source gNB does not provide related handover information of the target gNB 1' and the target gNB 1" to the UAV.

In this case, a range that is of the flight path and that is covered by the target gNB 1 may be carried in handover request messages that are sent by the target gNB 1 to the next-hop candidate target base stations of the target gNB 1: the target gNB 2, the target gNB 2', and the target gNB 2". For example, the range may be described by using a distance of the target gNB 1 on the flight path, and may be denoted as longitude and latitude coordinates, or may be described by using a time point at which the UAV reaches the target gNB 1. In this way, it is convenient for the next-hop candidate target base station to determine, based on the range that is of the flight path and that is covered by the target gNB 1, whether the range that is of the flight path and that is covered by the target gNB 1 overlaps a service range of the next-hop candidate target base station. If the target gNB 2' determines that the range that is of the flight path and that is covered by the target gNB 1 does not overlap a service range of the target gNB 2', once the UAV accesses the target gNB 2' after accessing the target gNB 1, there is an area without service coverage, and this may cause service interruption. Therefore, the target gNB 2' determines that the target gNB 2' cannot serve the UAV. If the target gNB 2 and the target gNB 2" determine that the target gNB 2 and the target gNB 2" are capable of serving the UAV, steps of the target gNB 1 may be repeated, and the target gNB 2 and the target gNB 2" may separately send handover request messages to next-hop candidate target base stations of the target gNB 2 and the target gNB 2".

In a second possible manner, after receiving the flight path, the source gNB determines which candidate target base stations on the flight path are capable of serving the UAV For example, a calculated service sequence is as follows: the source gNB -> the target gNB 1 -> the target gNB 2, and the sequence is added to the handover request messages. After receiving the handover request messages, the candidate target base stations may subsequently send handover request messages to corresponding candidate target base stations based on the sequence. If the target gNB 1 determines, based on the sequence, that a next-hop candidate target base station is the target gNB 2, the target gNB 1 sends a handover request message to the target gNB 2. Because the source gNB may generate different service sequences by calculating a plurality of paths suitable for UAV handover, a candidate target base station that receives a handover request message sent by the source gNB may send one handover request message to each next-hop base station of the candidate target base station in the service sequences. This example is not used for any limitation.

A possible representation in which the handover request message carries the service sequence is: adding one or more lists to the handover request message, where a sequence in each list indicates a possible service sequence of candidate target base stations that serve the UAV.

In some examples, after sending the handover request messages, the source gNB starts a timer. After receiving a handover request response, the source gNB stops the timer, and enters a procedure of a next step. If the source gNB still does not receive a handover request response sent by any candidate target base station after a TXnRELOCprep timer of the source gNB expires, it indicates that there is no next-hop base station that can be accessed by the UAV, and the source gNB cancels handover to a candidate target base station in a direction of a corresponding flight path, and stops handover preparation.

It is considered that, in multi-hop interaction between base stations, a forwarding path in a transmission path is excessively long, the source gNB may fail to receive a response from the candidate target base station in time, resulting in timeout and handover preparation is incorrectly canceled. In this case, a hop count limit or time limit mechanism is introduced.

For example, the source gNB adds a hop count limit to a handover request. For example, a preset hop count is set, and the hop count is reduced by 1 each time one hop is passed, until the hop count reaches 0. A candidate target base station whose preset hop count is 0 no longer sends a handover request message to a next-hop candidate target base station, and sends a handover request response to a previous-hop base station. For example, a preset hop count is 3, after the source gNB sends a handover request message, the target gNB 1 receives the message, and the hop count is reduced to 2. The target gNB 2" receives the message sent by the target gNB 1, and the hop count is reduced to 1. A target gNB 3" receives the message sent by the target gNB 2", and the hop count is reduced to 0. In this case, the target gNB 3" does not send handover request messages to subsequent candidate target base stations such as a target gNB 4 and a target gNB 4", but only sends a handover request response to the target gNB 2".

There is another case. If a specific hop of base station fails to find a proper next-hop base station, the hop count may be directly set to 0, and a handover request response is sent to a previous-hop base station. In the foregoing example, when the target gNB 2" receives the handover request message sent by the target gNB 1, the hop count is reduced to 1, but the target gNB 2" does not find a proper next-hop base station, the target gNB 2" may reset the hop count to 0, and send a handover request response message to the previous-hop target gNB 1.

Alternatively, the source gNB adds an estimated timeout moment to the handover request message. For example, after receiving a handover request message, each hop of candidate target base station may compare a moment of receiving the handover request message with the timeout time, and when the receiving moment exceeds the estimated timeout moment, the candidate target base station does not send a handover request message to a next-hop candidate base station, but sends a handover request response to a previous-hop base station; or when the receiving moment does not exceed the estimated timeout moment, and the candidate target base station fails to find an eligible next-hop candidate base station, the candidate target base station sends a handover request response to the previous-hop base station. For example, if the estimated timeout moment carried in the handover request message is 3:30, and after the source gNB sends the handover request message, if a moment at which the target gNB 1 receives the message does not exceed 3:30, the target gNB 1 sends a handover request message to a next-hop candidate target base station like the target gNB 2". If a moment at which the target gNB 2" receives the handover request message exceeds 3:30, the target gNB 2" does not send a handover request message to a next-hop candidate target base station like the target gNB 3, but sends a handover request response to the target gNB 1.

Steps 6 and 7: Target gNBs send handover request responses to previous-hop candidate target base stations hop by hop.

In some examples, after receiving a handover request response message of a next-hop candidate target base station, a target gNB adds a handover condition from the target gNB to the next-hop candidate target base station, generates a responded handover request acknowledgement message with reference to an RRC configuration message of the target gNB, and sends the responded handover request acknowledgement message to a previous-hop candidate target base station.

The target gNB 1 is used as an example. For example, the target gNB 1 receives handover request responses of the target gNB 2 and the target gNB 2", and obtains RRC reconfiguration information of the target gNB 2 and the target gNB 2" from the handover request responses. The target gNB 1 adds handover conditions corresponding to the target gNB 2 and the target gNB 2" respectively. In addition, the target gNB 1 generates RRC reconfiguration information of the target gNB 1 and fills the RRC reconfiguration information in a handover request response message, and then sends the handover request response to a previous hop, namely, the source gNB. A possible configuration information format is shown as follows:
CONFIG (include ID1 CONFIG1 + ID2 COND2 CONFIG2 + ID2" COND2" CONFIG2")

CONFIG1 is an RRC configuration, namely, RRC reconfiguration information, of the target gNB 1, COND2 is a CHO execution condition from the target gNB 1 to the target gNB 2, CONFIG2 is RRC configuration information of the target gNB 2, COND2" is a handover condition from the target gNB 1 to the target gNB 2", CONFIG2" is RRC configuration information of the target gNB 2", and the like. A multi-level nested structure is generated.

Similarly, after receiving the handover request response, the source gNB adds, based on the foregoing content, a handover condition for a handover from the source gNB to each candidate target base station, and may generate an RRC reconfiguration message that may be denoted as a first RRC reconfiguration message.

In some examples, if the source gNB does not receive a handover request response sent by the candidate target base station after timeout, the source gNB cancels handover to the corresponding candidate target base station.

Step 8: The source gNB sends the first RRC reconfiguration message to the UAV.

In some examples, the first RRC reconfiguration message includes, in an information element CondReconfigToAddModList, a CHO execution condition between hops. The CHO execution condition is described in the foregoing example, and details are not described herein again.

Step 9: The UAV sends an RRC reconfiguration complete message to the source gNB.

After receiving an RRC reconfiguration message, the UAV sends an RRC reconfiguration complete message to the source gNB, so that the source gNB learns that the UAV has successfully received the message.

Step 10: After receiving the RRC reconfiguration message, the UAV still maintains a connection to the source gNB, and starts to evaluate a CHO execution condition of a candidate target base station based on the RRC configuration message. The target gNB 1 is used as an example. If the target gNB 1 meets a corresponding CHO execution condition like signal strength of the UAV, the UAV is detached from the source gNB, performs an RRC configuration corresponding to the target gNB 1 in the stored RRC reconfiguration message, synchronizes the RRC configuration to the target gNB 1, and sends an RRC reconfiguration complete message to the target gNB 1 to complete handover. The UAV releases the stored CHO configuration after successfully completing an RRC handover procedure.

Step 11: The target gNB 1 sends successful handover messages to the source gNB and the target gNB 2, to notify the source gNB and the target gNB 2 that the UAV has successfully accessed the target gNB 1.

It is assumed that the target gNB 2 is a next-hop target candidate base station of the target gNB 1 in a sequence in which the UAV is to be handed over. In this case, the target gNB 1 sends the successful handover messages to the source gNB and the target gNB 2, to notify the source gNB and the target gNB 2 that the UAV has successfully accessed the target gNB 1.

Optionally, in step 12, after receiving the successful handover message, the target gNB 2 starts to prepare a resource, and sends an acknowledgement message to the target gNB 1. Information elements that may be included in the acknowledgement message include a message type, an XnAP ID of the target gNB 2, a cause value of the acknowledgement message, and the like.

In some examples, if the UAV completes handover to a last target base station on the flight path, there is no next-hop candidate target base station, and step 12 does not need to be performed. In this embodiment of this application, an example in which there is a candidate target base station for handover is used for description.

Steps 13 and 14: The source gNB sends a handover cancel message to another candidate target base station that does not serve the UAV.

In a possible manner, the handover cancel message is forwarded hop by hop, and a cell global identifier (Cell global identifier, CGI) corresponding to a corresponding candidate target base station to be canceled is carried in a target cell ID information element, so that the handover cancel message is accurately forwarded to the candidate target base station to be canceled.

In some examples, a hop count indication may alternatively be included in a handover cancel message, and a preset hop count may be limited to the hop count specified in step 3. Still, each time the preset hop count is received by each candidate target base station, the preset hop count is reduced by 1. If the hop count is reduced to 0 or the hop count returns to 0 because a next-hop base station is not found, it indicates that the handover cancel message is not forwarded to a next hop; otherwise, it indicates that the handover cancel message needs to be forwarded.

In another possible manner, the source gNB calculates candidate target base stations to be canceled, and sends a handover message to each of the candidate target base stations.

In this embodiment of this application, a sequence of steps 1 and 2 is not limited.

In some examples, due to time and hop count limitations, RRC configuration information obtained by sending handover request messages by the source gNB to subsequent-hop candidate target base stations may not sufficiently cover an entire flight path of the UAV. Therefore, after the UAV is handed over to an obtained last-hop candidate target base station, RRC configuration information and a CHO execution condition of the UAV may be updated, as shown in the following example.

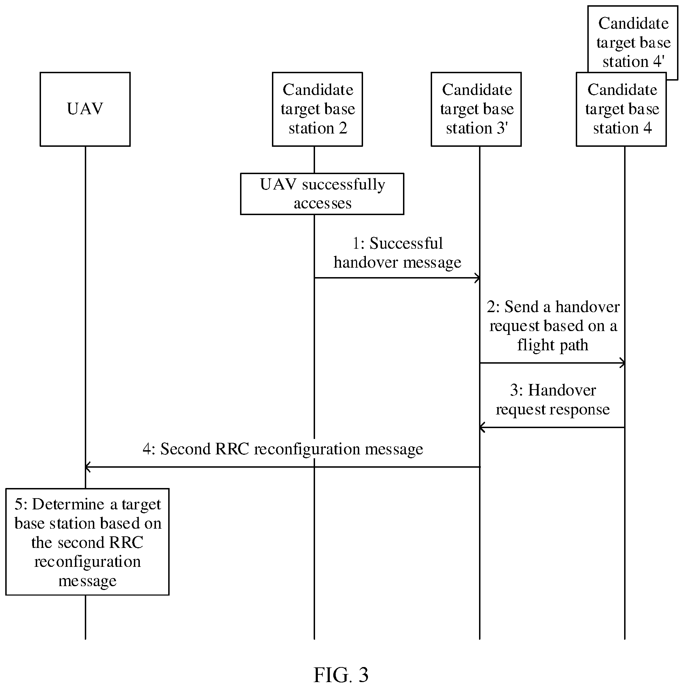

According to the method provided in this embodiment of this application, it is determined that a sequence of target base stations to which the UAV is to be handed over on the flight path of the UAV is as follows: the source gNB -> the target gNB 1 -> the target gNB 2 -> the target gNB 3'. In the following example, handover request responses of a plurality of candidate target base stations obtained by the source gNB include base stations that are 1 to N (where N = 3) hops away from the source gNB. It is assumed that a hop count T of a base station farthest away from the source gNB on the flight path is 10 hops, the UAV can obtain only related information of the source gNB, the target gNB 1, the target gNB 2, and the target gNB 3'. An embodiment of this application illustrates a subsequent method for obtaining related information of a candidate target base station. FIG. 3 is a flowchart of another conditional handover method according to an embodiment of this application. As shown in FIG. 3, steps are as follows:

Step 1: After a UAV successfully accesses the target gNB 2, the target gNB 2 sends a successful handover message to the target gNB 3'.

Step 2: When receiving the successful handover message, the target gNB 3' sends a handover request message to a next-hop candidate target base station based on a flight path.

When the UAV accesses a target gNB 1, the target gNB 1 also sends a successful handover message to the target gNB 2. However, the UAV stores RRC configuration information of the target gNB 3' and a CHO execution condition from the target gNB 2 to the target gNB 3'. Therefore, the target gNB 2 does not need to re-obtain related information of a subsequent candidate target base station from the target gNB 3' after receiving the successful handover message. Therefore, only when a successful handover message sent by a previous-hop target base station is received, and a preset hop count is zero, or a moment of receiving the successful handover message exceeds an estimated timeout moment, it can be determined that the current base station is a last-hop base station that is limited by a hop count or time and can return a handover request response, to determine that the current base station needs to send a handover request message to a next-hop candidate target base station, to obtain related RRC configuration information and CHO execution conditions of a plurality of candidate target base stations of a plurality of subsequent hops on a flight path of the UAV In FIG. 3, an example in which the target gNB 3' sends handover requests to a target gNB 4 and a target gNB 4' is used. However, this does not constitute a limitation.

For example, if the UAV has related information of base stations that are 1 to N hops away from a serving base station, when the UAV accesses a previous-hop target base station of a target base station N hops away from the serving base station, the target base station N hops away from the serving base station starts to obtain related information of a plurality of subsequent candidate target base stations. For example, the target base station N hops away from the serving base station sends, based on the flight path of the UAV in this example, handover request messages to a plurality of candidate target base stations that are N + 1 to M hops away from the serving base station based on a moving path of a terminal, where N + 1 < M ≤ T, and N is greater than 1. N, M, and T are positive integers, and T is a hop count of a base station farthest away from the serving base station on the moving path, for example, T = 10. If a hop count limit or the estimated timeout moment is the same as that in the foregoing example, the target gNB 3' obtains related information about a plurality of candidate target base stations of three subsequent hops. To be specific, the target gNB 3' sends handover request messages to candidate target base stations such as the target gNB 4 and the target gNB 4', the target gNB 4 sends handover request messages to candidate target base stations such as a target gNB 5 and a target gNB 5', the target gNB 4' sends handover request messages to candidate target base stations such as the target gNB 5 and the target gNB 5'. By analogy, when handover request messages are sent to a target gNB 6, a target gNB 6', and the like, the preset hop count is zero or a receiving moment exceeds the estimated timeout moment. The target gNB 6, the target gNB 6', or the like no longer sends a handover request message to a next-hop candidate target base station, but sends a handover request response to a previous-hop candidate target base station of the target gNB 6, the target gNB 6', or the like. For sending a handover request response hop by hop, refer to the foregoing example. The target gNB 3' sends the handover request messages this time, and may obtain handover request responses of a plurality of candidate target base stations that are four to six hops away from the source gNB. In this example, M = 6, and when the UAV is handed over to a target base station five hops away from the source gNB, a target base station six hops away from the source gNB may repeat this step. If M reaches 10, related information of all hops of target base stations on the flight path of the UAV may be provided to the UAV, and a step of obtaining a subsequent candidate target base station in this embodiment does not need to be repeatedly performed.

Step 3: The target gNB 3' receives a handover request response sent by a next-hop candidate target base station, and adds a CHO execution condition from the target gNB 3' to the next-hop candidate target base station based on the handover request response, to obtain a second RRC reconfiguration message.

For a generation manner of the second RRC reconfiguration message in the foregoing embodiment, refer to the foregoing example.

Handover request responses include RRC configurations and CHO execution conditions of a plurality of candidate target base stations that are N + 2 to M hops away from the serving base station, and RRC configurations of a plurality of candidate target base stations that are N + 1 hops away from the serving base station. For example, the handover request responses include RRC configurations and CHO execution conditions of a plurality of candidate target base stations that are 4 to 6 hops away from the serving base station, namely, RRC configurations of the target gNB 4, the target gNB 4', the target gNB 5, the target gNB 5', the target gNB 6, and the target gNB 6', and CHO execution conditions from the target gNB 4 to the target gNB 5 and the target gNB 5', CHO execution conditions from the target gNB 4' to the target gNB 5 and the target gNB 5', CHO execution conditions from the target gNB 5' to the target gNB 6 and the target gNB 6', and CHO execution conditions from the target gNB 5 to the target gNB 6 and the target gNB 6'.

The second RRC reconfiguration message includes RRC configurations and CHO execution conditions of a plurality of candidate target base stations that are N + 1 to M hops away from the serving base station. For example, the target gNB 3' correspondingly adds, to the RRC configurations and the CHO execution conditions in the received handover request responses, CHO execution conditions from the target gNB 3' to the target gNB 4 and the target gNB 4', to obtain the second RRC reconfiguration message.

Step 4: If the UAV accesses the target gNB 3', the target gNB 3' sends the second RRC reconfiguration message to the UAV.

In this embodiment of this application, an example in which the terminal is a UAV is used. If the terminal is another terminal, similarly, if the terminal accesses a target base station N hops away from a serving base station, the target base station sends a second RRC reconfiguration message to the terminal, so that the terminal determines a subsequent target base station based on the second RRC reconfiguration message in a process of moving along a moving path.

In some examples, when the UAV flies, based on the flight path, to a penultimate-hop target base station in an obtained RRC reconfiguration message requested by the target gNB 3', a last-hop target base station may repeatedly perform the foregoing steps, to obtain a candidate target base station capable of serving the UAV on a subsequent flight path, so that the UAV obtains a related RRC reconfiguration message and CHO execution condition of a subsequent target base station, to ensure that a flight service for the UAV on an entire flight path is not interrupted.

It should be noted that, when the UAV accesses the penultimate-hop target base station in the obtained RRC reconfiguration message, the last-hop target base station starts to obtain RRC reconfiguration messages and CHO execution condition of a plurality of subsequent candidate target base stations, so that sufficient time can be ensured to obtain related information.

Step 5: The UAV receives the second RRC reconfiguration message sent by the target gNB 3', and determines a target base station based on the second RRC reconfiguration message.

A method for determining a target base station by the UAV is shown in the foregoing example.

In this embodiment of this application, a serving base station plans all candidate target base stations or each hop of base station plans a next-hop base station, and an RRC configuration of each hop base station on the entire moving path and the like are obtained through interaction between single-hops. Then, the serving base station summarizes collected RRC configurations and CHO execution conditions to generate an RRC reconfiguration message and sends the RRC reconfiguration message to the terminal, to help the terminal perform CHO handover. This can avoid data interruption caused by an excessively high moving speed of the terminal and a handover failure.

The method is applied to a UAV flight scenario. The serving base station may send a CHO execution condition of each hop of base station to the UAV in advance through RRC configuration information, to optimize a CHO configuration stored in the UAV.

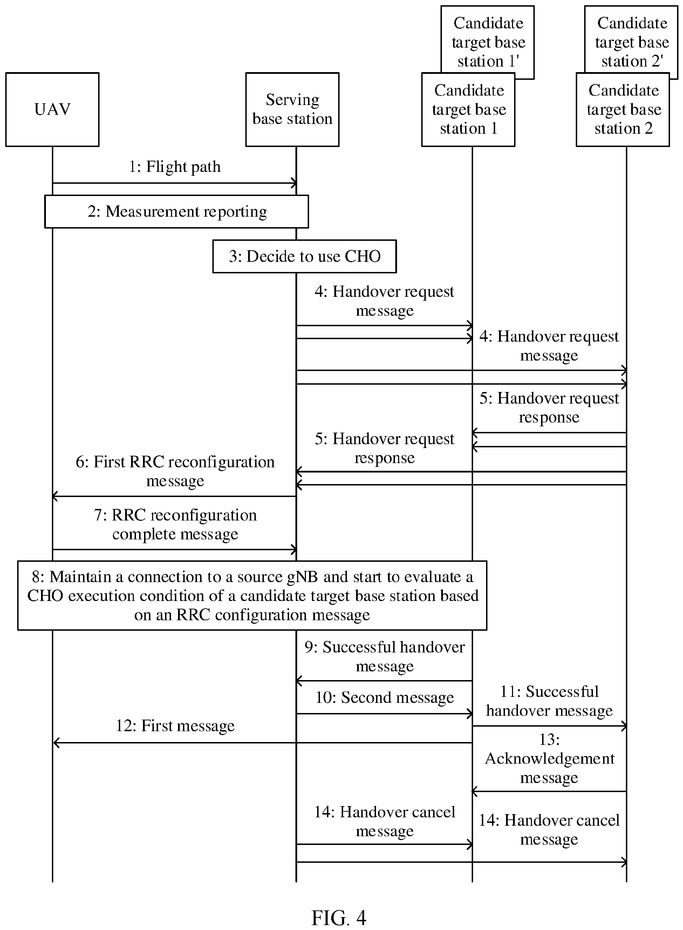

In this embodiment of this application, the serving base station is the source gNB, the terminal is the UAV, candidate target base stations that are one hop away from the source gNB are denoted as the target gNB 1, a target gNB 1', and a target gNB 1", and candidate target base stations that are two hops away from the serving base station are denoted as the target gNB 2, a target gNB 2', and a target gNB 2". By analogy, the source gNB interacts with a plurality of hops of candidate target base stations, the source gNB summarizes an RRC configuration and a CHO execution condition in a handover request response message sent by each candidate target base station, generates an RRC configuration message, and sends the RRC configuration message to the UAV. Generally, the UAV is handed over to a subsequent target base station hop by hop. FIG. 4 is a flowchart of still another conditional handover method according to an embodiment of this application. As shown in FIG. 4, the method is as follows:
Step 1: A UAV delivers a flight path to a source gNB.
Step 2: The UAV performs measurement reporting.
Step 3: The source gNB determines to use CHO based on information measured and reported by the UAV.
Step 4: The source gNB sends handover request messages to a plurality of candidate target base stations.

In a possible manner, the handover request messages sent by the source gNB to a plurality of candidate target base stations carry the flight path, and each base station makes a decision. For example, after receiving a handover request, base stations such as T1 and T2 determine, based on the flight path and configurations of the base stations, such as network coverage ranges and signal strength covered on the flight path, whether the base stations are capable of serving the UAV. If the base stations determine that the base stations are capable of serving the UAV, the base stations add RRC configurations of the base stations to handover request responses, and send the handover request responses to the source gNB.

In another possible manner, the source gNB first calculates, based on the flight path, candidate target base stations that may serve the UAV. For example, if it is calculated that which base stations are capable of serving the UAV in a specific time period or in a specific range of the flight path, these base stations that may provide services are used as candidate target base stations, and are denoted as target gNBs. For example, the source gNB calculates that base stations: a target gNB 1, a target gNB 1', and a target gNB 1" that are one hop away from the source gNB, and a target gNB 2, a target gNB 2', and a target gNB 2" that are two hops away from the source gNB may serve the UAV. Therefore, the source gNB sends the handover request messages to these candidate target base stations.

In some examples, the flight path may include base stations that are 10 hops away from the source gNB, and all these base stations may receive the handover request messages sent by the source gNB. In the foregoing two cases, if the base stations receive the handover request messages sent by the source gNB, the base stations first determine whether the base stations are capable of serving the UAV. If the base stations are capable of serving the UAV, the base stations send, to the source gNB, handover request responses that include RRC configurations of the base stations. These base stations capable of serving the UAV are candidate target base stations.

Step 5: A target gNB sends a handover request response to the source gNB.

The target gNB may add, to the handover request response, a range that can be covered by the target gNB on the flight path. For example, if the target gNB 2" determines, based on a situation of the target gNB 2", that the target gNB 2" is capable of serving the UAV, the target gNB 2" adds a description of a distance covered by the target gNB 2" on the flight path to the handover request response, or adds longitude and latitude coordinates of the target gNB 2". When the handover request messages sent by the source gNB to the plurality of candidate target base stations carry the flight path, the target gNB 2" may further determine, based on the flight path, a time point at which the UAV arrives at the target gNB 2". In this case, the time point may be added to the handover request response.

In some examples, the handover request messages sent by the source gNB to the plurality of candidate target base stations carry the flight path. The source gNB broadcasts the handover request messages to surrounding base stations. Therefore, when receiving handover request responses from the target gNBs, the source gNB may calculate, based on the received handover request responses, a UAV serving sequence in which the target gNBs that subsequently serve the UAV. For example, calculation is performed based on a range or time covered by each target gNB in the handover request response on the flight path, so that at least one service sequence of target gNBs capable of serving the UAV is calculated, one service sequence may be: the source gNB -> the target gNB 1 -> the target gNB 2, another service sequence is: the source gNB -> the target gNB 1 -> the target gNB 2", the source gNB -> the target gNB 1' -> the target gNB 2", or the like. Each service sequence corresponds to a possible handover path.

In some examples, the source gNB first calculates, based on a flight path, target gNBs that may serve the UAV, and then sends handover requests to these target gNBs. If the target gNBs determine that the target gNBs are capable of serving the UAV, the target gNBs send handover request responses, where the handover request responses include RRC configurations of the target gNBs. The source gNB generates, based on the received handover request responses, a list of all base stations that subsequently serve the UAV. For example, the source gNB receives RRC configurations of candidate target base stations such as the target gNB 1, the target gNB 1', the target gNB 2, and the target gNB 2", and then correspondingly add a CHO execution condition from the source gNB to each candidate target base station, to obtain an RRC reconfiguration message.

Step 6: The source gNB sends a first RRC reconfiguration message to the UAV, where the first RRC reconfiguration message includes RRC configurations and CHO execution conditions of the candidate target base stations.

In some examples, an identifier may be added to the first RRC reconfiguration message, to indicate that the UAV no longer releases an RRC configuration and a CHO execution condition after successfully completing a handover procedure. 0 may indicate storing, and 1 may indicate releasing. According to this embodiment of this application, the source gNB sends the handover request messages to the plurality of hops of base stations on the UAV flight path, and adds a CHO execution condition of the source gNB based on the RRC configurations carried in the handover request responses returned by the plurality of hops of base stations, to generate the first RRC reconfiguration message. After the first RRC reconfiguration message is sent to the UAV, the UAV does not release the RRC configurations after handover is completed. This is because the first RRC reconfiguration message carries RRC configurations of a plurality of hops of candidate target base stations, for example, the target gNB 1, the target gNB 1', the target gNB 2, and the target gNB 2". After accessing the target gNB 1', the UAV may further use an RRC configuration of the target gNB 2 or the target gNB 2" in subsequent handover. Therefore, storing RRC configurations and CHO execution conditions facilitates subsequent handover to a next-hop candidate target base station.

In a possible manner, when the source gNB calculates the at least one service sequence of target gNBs capable of serving the UAV, the source gNB may correspondingly add, to the first RRC reconfiguration message, the service sequence and configuration information that is provided by the target gNBs for the UAV on a path corresponding to the service sequence. For example, a plurality of similar conditionReconfiguration information elements are added to the first RRC reconfiguration message, and each information element represents one piece of RRC configuration information of a candidate target base station that may serve the UAV on a flight path of the UAV. Alternatively, a plurality of condReconfigToAddModLists are added to a conditionalReconfiguration field in the first RRC reconfiguration message, and each list corresponds to one piece of RRC configuration information of a candidate target base station that may serve the UAV on a flight path of the UAV.

Step 7: The UAV sends a first RRC reconfiguration complete message to the source gNB, to inform the source gNB that an RRC reconfiguration message has been received.

Step 8: After receiving the first RRC reconfiguration message including the RRC configurations and the CHO execution conditions, the UAV maintains a connection to the source gNB, and starts to evaluate a CHO execution condition of each target candidate base station.

For example, a candidate target base station selected by the UAV is the target gNB 1. If the target gNB 1 meets a corresponding CHO execution condition, the UAV is detached from the source gNB, performs a stored RRC configuration of the corresponding target gNB 1, synchronizes the RRC configuration to the target gNB 1, and sends an RRC reconfiguration complete message to the target gNB 1 to complete handover. After an RRC handover procedure is successfully completed, the UAV no longer releases the stored RRC configurations and CHO execution conditions.

Step 9: The target gNB 1 sends a successful handover message to the source gNB, to notify the source gNB that the UAV has successfully accessed the target gNB 1.

Step 10: After receiving the successful handover message, the source gNB sends a second message to the target gNB 1.

Because of interaction between the target gNB 1 and the source gNB in the foregoing steps, only the target gNB 1 provides an RRC configuration of the target gNB 1 to the source gNB. The target gNB 1 does not know which target gNBs have interacted with the source gNB, and which target gNBs may subsequently serve the UAV. Therefore, the source gNB needs to notify the target gNB 1 of which base stations subsequently serve the UAV Therefore, the source gNB may send, to a next-hop target base station, namely, the target gNB 1, via the second message, the configuration information provided for the UAV. The second message carries RRC configurations and CHO execution conditions of candidate target base stations that subsequently serve the UAV. In this way, the target gNB 1 can obtain related information of several subsequent hops of candidate target base stations. The second message may include a service sequence of candidate target base stations and an XnAP ID that corresponds to the UAV and that is on each Xn interface. The XnAP ID is prepared for subsequently indicating the UAV to update a handover condition. In addition, the second message may further include a CHO execution condition provided by a source base station for the UAV

Step 11: After obtaining the second message, the target gNB 1 reads that a next hop is the target gNB 2, and may send a successful handover message to the next-hop target gNB 2, to notify the target gNB 2 to be ready.

Step 12: The target gNB 1 may update, to the UAV, a CHO execution condition from the target gNB 1 to the target gNB 2, for example, send a first message to the UAV, where the first message may specify a trigger moment for handover from the target gNB 1 to the target gNB 2, and carry a trigger and leave condition for the handover from the target gNB 1 to the target gNB 2. For example, the condition may be represented by signal strength. A corresponding field value like *0.5 dB in the first message indicates that the UAV can be handed over from the target gNB 1 to the target gNB 2 when signal strength of the target gNB 2 meets the value.

In some examples, step 13 may be further performed. After receiving the successful handover message sent by the target gNB 1, the target gNB 2 starts to prepare a resource, and sends an acknowledgement message to the target gNB 1. Information elements that may be included in the message may include a message type, an XnAP ID of the target gNB 2, a cause value of the acknowledgement message, and the like.

Step 14: The source gNB sends a handover cancel message to another base station that does not serve the UAV.

Optionally, the source gNB sends handover cancel messages to base stations that do not send handover request responses to the source gNB, so that the base stations determine that the base stations no longer need to serve the UAV.

In this embodiment of this application, according to the foregoing method, RRC reconfiguration messages of a plurality of hops of candidate target base stations that are on a flight path of the UAV and capable of serving the UAV are obtained. The UAV may be handed over, based on the stored RRC reconfiguration messages and a continuously updated CHO execution condition, to a target base station determined by the UAV along the flight path in time, to avoid data interruption caused by an excessively high flight speed of the UAV and a handover failure of the UAV.

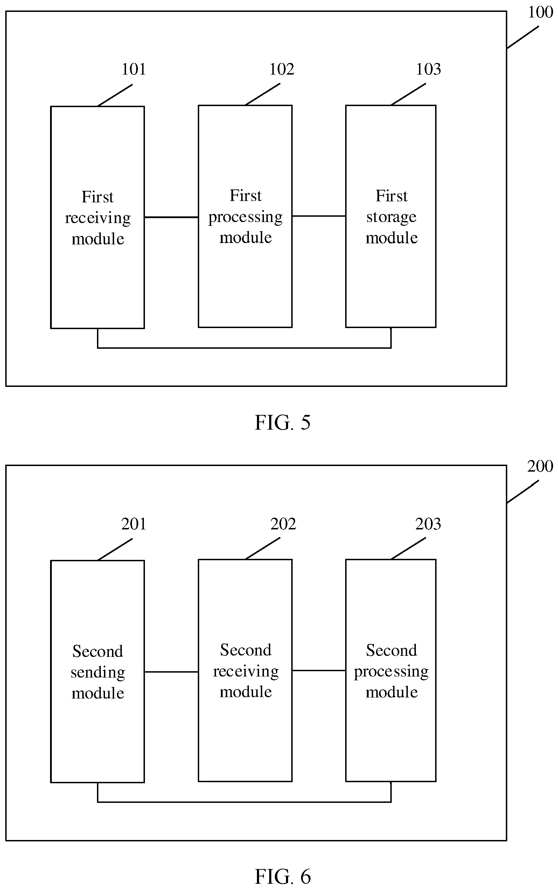

FIG. 5 is a diagram of a terminal device according to an embodiment of this application. A terminal device 100 includes a processor and a memory. The memory is configured to store computer instructions. When the processor executes the computer instructions, the remote terminal device is enabled to perform the CHO method in the foregoing embodiment.

Modules for executing the CHO method in the foregoing embodiment may be integrated into a processor. As shown in FIG. 5, the processor includes a first receiving module 101, a first processing module 102, and a first storage module 103.

The first receiving module 101 is configured to receive a first radio resource control RRC reconfiguration message, where the first RRC reconfiguration message includes RRC configurations and CHO execution conditions of a plurality of candidate target base stations, the plurality of candidate target base stations include base stations that are 1 to N hops away from a serving base station, 1 < N ≤ T, T is a hop count from a farthest base station to the serving base station on a moving path, and both N and T are positive integers. The first processing module 102 is configured to: determine a target base station based on the first RRC reconfiguration message in a process of moving along the moving path, where the moving path is a specified path on which movement is to be performed, and the target base station is one of the plurality of candidate target base stations. The first processing module 102 is further configured to perform handover to the target base station.

In some examples, the first processing module 102 is specifically configured to determine a target base station one hop away from the serving base station based on the first RRC reconfiguration message in the process of moving along the moving path; and if it is determined that handover continues, determine, based on the first RRC reconfiguration message, a candidate target base station two hops away from the serving base station as the target base station. The first storage module 103 is configured to store the RRC configurations and the CHO execution conditions of the plurality of candidate target base stations.

In some examples, the first receiving module 101 is further configured to: after a target base station N hops away from the serving base station is accessed, receive a second RRC reconfiguration message sent by the target base station N hops away from the serving base station, where the second RRC reconfiguration message includes RRC configurations and CHO execution conditions of a plurality of candidate target base stations that are N + 1 to M hops away from the serving base station, N + 1 < M ≤ T, and M is a positive integer. The first processing module 102 is further configured to determine a target base station based on the second RRC reconfiguration message.

Optionally, the first receiving module 101 is further configured to receive a first message sent by the target base station, to perform, based on the first message, handover to a subsequently determined target base station to be handed over to, where the first message includes at least one of the following: a trigger moment, a trigger condition, a leave condition, or signal strength of the target base station.

FIG. 6 is a diagram of a serving base station according to an embodiment of this application. A serving base station 200 includes a processor and a memory. The memory is configured to store computer instructions. When the processor executes the computer instructions, the remote terminal device is enabled to perform the CHO method in the foregoing embodiment.

Modules for executing the CHO method in the foregoing embodiment may be integrated into a processor. As shown in FIG. 6, the processor includes a second sending module 201, a second receiving module 202, and a second processing module 203.

The second sending module 201 is configured to send handover request messages to a plurality of candidate target base stations based on a moving path, where the moving path is a specified path on which movement is to be performed, the plurality of candidate target base stations include base stations that are 1 to N hops away from a serving base station, 1 < N ≤ T, T is a hop count from a farthest base station to the serving base station on the moving path, and N and T are positive integers. The second receiving module 202 is configured to receive handover request responses, where the handover request responses include radio resource control RRC configurations of the plurality of candidate target base stations. The second sending module 201 is further configured to send a first RRC reconfiguration message to a terminal, where the first RRC reconfiguration message includes the RRC configurations and obtained CHO execution conditions of the plurality of candidate target base stations.

In some examples, the handover request message carries the moving path.

In some examples, the handover request responses further include the CHO execution conditions of the plurality of candidate target base stations. The second sending module 201 is further configured to send the handover request message to a candidate target base station one hop away from a serving base station on the moving path. The second receiving module 202 is further configured to receive the handover request response sent by the candidate target base station one hop away from the serving base station, where the handover request response includes an RRC configuration of the candidate target base station one hop away from the serving base station, and an RRC configuration and a CHO execution condition that are of a candidate target base station capable of serving the terminal on the moving path and that are received by the candidate target base station one hop away from the serving base station. The second processing module 203 is configured to correspondingly add a CHO execution condition from the serving base station to the candidate target base station one hop away, and the received RRC configuration and CHO execution condition, to obtain the first RRC reconfiguration message.

In some examples, the handover request responses further include the CHO execution conditions of the plurality of candidate target base stations. The second processing module 203 is further configured to generate at least one service sequence based on a service sequence of the plurality of candidate target base stations that serve the terminal on the moving path. The second sending module 201 is further configured to send, based on the service sequence, the handover request message to a candidate target base station one hop away from the serving base station, where the handover request message carries a service sequence corresponding to the candidate target base station one hop away from the serving base station. The second receiving module 202 is further configured to receive the handover request response sent by the candidate target base station one hop away from the serving base station, where the handover request response includes an RRC configuration of the candidate target base station one hop away from the serving base station, and an RRC configuration and a CHO execution condition of a candidate target base station in the service sequence received by the candidate target base station one hop away from the serving base station. The second processing module 203 is further configured to correspondingly add a CHO execution condition from the serving base station to the candidate target base station one hop away, and the received RRC configuration and CHO execution condition, to obtain the first RRC reconfiguration message.

In some examples, the second processing module 203 is further configured to obtain, through calculation based on the moving path, the plurality of candidate target base stations capable of serving the terminal. The second sending module is further configured to send the handover request messages to the plurality of calculated candidate target base stations. The second sending module 201 is further configured to send the handover request messages to the plurality of candidate target base stations based on the moving path; and the second receiving module is further configured to receive the handover request responses sent by the plurality of candidate target base stations capable of serving the terminal, where whether the plurality of candidate target base stations are capable of serving the terminal is determined by the plurality of candidate target base stations based on the moving path.

Optionally, the second processing module 203 is further configured to add the CHO execution conditions corresponding to the RRC configurations of the plurality of candidate target base stations, to obtain the first RRC reconfiguration message.

In some examples, the handover request message carries a preset hop count, the preset hop count is reduced by one each time the preset hop count is received by one candidate target base station, and when the preset hop count is reduced to zero, the candidate target base station no longer sends a handover request message to a next-hop candidate target base station, and sends the handover request response to a previous-hop base station; or if the candidate target base station fails to find an eligible next-hop candidate target base station, the preset hop count returns to zero, so that the candidate target base station sends the handover request response to the previous-hop base station.

Optionally, the handover request message carries an estimated timeout moment, so that the candidate target base station compares a receiving moment of receiving the handover request message by the candidate target base station with the estimated timeout moment, and if the receiving moment exceeds the estimated timeout moment, the candidate target base station confirms timeout, no longer sends a handover request message to a next-hop candidate target base station, and sends the handover request response to a previous-hop base station; or when the receiving moment does not exceed the estimated timeout moment and the candidate target base station fails to find an eligible next-hop candidate target base station, the candidate target base station sends the handover request response to the previous-hop base station.

The second processing module 203 is further configured to: if the second receiving module receives a successful handover message sent by a target base station, determine that the terminal has been handed over to the target base station. The second sending module sends a second message to the target base station, so that the target base station determines, based on the second message, a candidate target base station to which the terminal subsequently is handed over on the moving path, where the second message includes an ID of the candidate target base station to which the terminal subsequently is handed over and RRC configuration information provided for the terminal.

Optionally, the RRC configuration information provided for the terminal is obtained based on the RRC configuration in the handover request response.

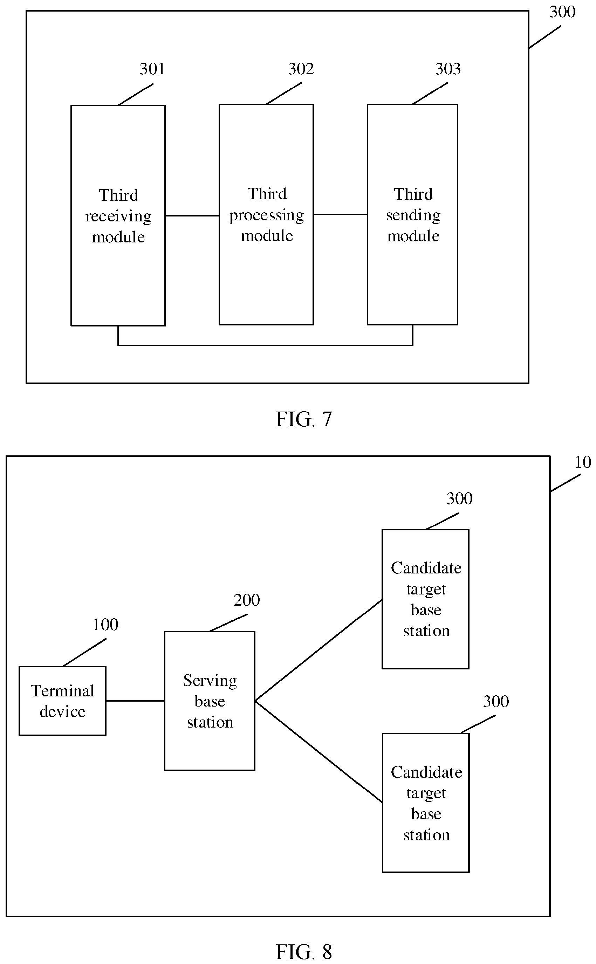

FIG. 7 is a candidate target base station according to an embodiment of this application. A candidate target base station 300 includes a processor and a memory. The memory is configured to store computer instructions. When the processor executes the computer instructions, the remote terminal device is enabled to perform the CHO method in the foregoing embodiment.

Modules for executing the CHO method in the foregoing embodiment may be integrated into a processor. As shown in FIG. 6, the processor includes a third receiving module 301, a third processing module 302, and a third sending module 303.

The third receiving module 301 is configured to receive a handover request message, where the handover request message is sent based on a moving path, and the moving path is a specified path on which movement is to be performed. The third processing module 302 is configured to generate a handover request response for the handover request message, where the handover request response includes at least one radio resource control RRC configuration. The third sending module 303 is configured to send the handover request response.

In some examples, the handover request message carries the moving path. The third receiving module 301 is further configured to receive the handover request message sent by a previous-hop base station, where the previous-hop base station is a serving base station or a candidate target base station.

The third processing module 302 is further configured to: if it is determined, based on the moving path, that a service can be provided for a terminal, determine a next-hop candidate target base station based on the moving path, and the third sending module sends the handover request message to the next-hop candidate target base station. The third processing module 303 is further configured to: if the third receiving module receives a handover request response sent by the next-hop candidate target base station, correspondingly add, based on the next-hop handover request response and an RRC configuration of a candidate base station, a CHO execution condition from the candidate base station to the next-hop candidate target base station, to obtain the handover request response; or if the third receiving module does not receive a handover request response fed back by the next-hop candidate target base station, obtain the handover request response based on the RRC configuration of the candidate base station. The third sending module is further configured to send the handover request response to the previous-hop base station.

In some examples, the handover request message carries a service sequence generated by a serving base station based on the moving path. The third receiving module 301 is further configured to receive the handover request message sent by a previous-hop base station, where the previous-hop base station is a serving base station or a candidate target base station. The third processing module 302 is further configured to determine a next-hop candidate target base station based on the service sequence, and the third sending module sends the handover request message to the next-hop candidate target base station. The third processing module 302 is further configured to: if the third receiving module receives a next-hop handover request response sent by the next-hop candidate target base station, correspondingly add, based on the next-hop handover request response and an RRC configuration of a candidate base station, a CHO execution condition from the candidate base station to the next-hop candidate target base station, to obtain the handover request response; or if the third processing module does not receive a next-hop handover request response fed back by the next-hop candidate target base station, obtain the handover request response based on the RRC configuration of the candidate base station. The third sending module 303 is further configured to send the handover request response to the previous-hop base station.

In some examples, the handover request message carries the moving path, the third receiving module 301 is further configured to receive the handover request message sent by a serving base station. The third processing module 302 is further configured to: if it is determined, based on the moving path, that a capability of serving a terminal is available, obtain the handover request response based on the RRC configuration of a candidate base station. The third sending module 303 is further configured to send the handover request response to the serving base station.

In some examples, the third processing module 302 is further configured to: if it is determined that there is no next-hop candidate target base station that meets a handover condition, generate the handover request response, where the handover request response includes the RRC configuration of the candidate base station.

In some examples, the third sending module 303 is specifically configured to: if the handover request message carries a preset hop count, and the preset hop count is not zero after the handover request message is received, send the handover request message to the next-hop candidate target base station, where the preset hop count is reduced by one each time the preset hop count is received by one candidate target base station; or if the handover request message carries an estimated timeout moment and a receiving moment of receiving the handover request message does not exceed the estimated timeout moment, send the handover request message to the next-hop candidate target base station.

The handover request message carries a preset hop count. The third sending module is specifically configured to: if the preset hop count is zero after the handover request message is received, generate the handover request response, where the handover request response includes the RRC configuration of the candidate base station; or if the preset hop count is not zero after the handover request message is received, and it is determined that there is no next-hop candidate target base station that meets a handover condition, return the preset hop count to zero, and generate the handover request response. Alternatively, the handover request message carries an estimated timeout moment. The third sending module is specifically configured to: if a receiving moment of receiving the handover request message exceeds the estimated timeout moment, generate the handover request response; or if the receiving moment does not exceed the estimated timeout moment, and it is determined that there is no next-hop candidate target base station that meets a handover condition, generate the handover request response.

In some examples, the handover request message carries the moving path on which a terminal moves. The third sending module 303 is further configured to: if the terminal performs accessing, send a successful handover message to a next-hop target base station on the moving path, where the successful handover message indicates that the terminal has completed the accessing; and determine, based on the moving path, the next-hop target base station as a base station that the terminal is to access.

In some examples, if the third receiving module 301 receives the successful handover message sent by a previous-hop target base station, and the third processing module determines that the preset hop count is zero or the receiving moment exceeds the estimated timeout moment, handover request messages are sent to a plurality of candidate target base stations based on the moving path, where the plurality of candidate target base stations include base stations that are N + 1 to M hops away from the serving base station, N + 1 < M ≤ T, T is a hop count from a farthest base station to the serving base station on the moving path, and N, M, and T are positive integers. The third receiving module 301 is further configured to receive a handover request response, where the handover request response includes RRC configurations and CHO execution conditions of a plurality of candidate target base stations N + 2 to M hops away from the serving base station, and an RRC configuration of at least one candidate target base station N + 1 hops away from the serving base station. The third processing module 302 is further configured to: correspondingly add, to the RRC configuration of the at least one candidate target base station N + 1 away from the serving base station, a CHO execution condition of handover to the candidate base station; and obtain a second RRC reconfiguration message based on the RRC configuration and the CHO execution condition. The third sending module 303 is further configured to: if the terminal performs accessing, send the second RRC reconfiguration message to the terminal.

In some examples, if the third receiving module 301 receives a second message, the third processing module 302 determines the next-hop candidate target base station based on the second message, where the second message includes an ID of a candidate target base station to which the terminal subsequently is handed over and RRC configuration information provided for the terminal; and the third sending unit 303 is further configured to send, to the terminal, a first message updated based on the second message, where the first message includes at least one of the following: a trigger moment, a trigger or leave condition, or signal strength of a target base station.

Optionally, the RRC configuration information provided for the terminal is obtained based on the RRC configuration in the handover request response.

FIG. 8 is a diagram of a communication system according to an embodiment of this application. A system 10 includes a terminal device 100, a serving base station 200, and at least one candidate target base station 300.

The terminal device 100, the serving base station 200, and the at least one candidate target base station 300 provided in this embodiment of the present invention may use the method in the foregoing embodiments to perform conditional handover of the terminal device between base stations in a communication system.

A person skilled in the art should be aware that in the foregoing one or more examples, functions described in embodiments of this application may be implemented by hardware, software, firmware, or any combination thereof. When the functions are implemented by software, the foregoing functions may be stored in a computer-readable medium or transmitted as one or more instructions or code in a computer-readable medium. The computer-readable medium includes a computer storage medium and a communication medium, where the communication medium includes any medium that enables a computer program to be transmitted from one place to another. The storage medium may be any available medium accessible to a general-purpose or a dedicated computer.

The foregoing describes embodiments of this application with reference to the accompanying drawings. However, this application is not limited to the foregoing specific implementations. The foregoing specific implementations are merely examples, but are not limitative. Inspired by this application, a person of ordinary skill in the art may further make modifications without departing from the purposes of this application and the protection scope of the claims, and all the modifications shall fall within the protection of this application.

## Claims

1. A conditional handover CHO method, comprising:
receiving a first radio resource control RRC reconfiguration message, wherein the first RRC reconfiguration message comprises RRC configurations and CHO execution conditions of a plurality of candidate target base stations, the plurality of candidate target base stations comprise base stations that are 1 to N hops away from a serving base station, 1 < N ≤ T, T is a hop count from a farthest base station to the serving base station on a moving path, and both N and T are positive integers;
determining a target base station based on the first RRC reconfiguration message in a process of moving along the moving path, wherein the moving path is a specified path on which movement is to be performed, and the target base station is one of the plurality of candidate target base stations; and
performing handover to the target base station.

2. The method according to claim 1, wherein the determining a target base station based on the first RRC reconfiguration message in a process of moving along the moving path comprises:
determining a target base station one hop away from the serving base station based on the first RRC reconfiguration message in the process of moving along the moving path; and
if it is determined that handover continues, determining, based on the first RRC reconfiguration message, a candidate target base station two hops away from the serving base station as the target base station.

3. The method according to claim 1 or 2, wherein after the performing handover to the target base station, the method further comprises:
storing the RRC configurations and the CHO execution conditions of the plurality of candidate target base stations.

4. The method according to claim 3, wherein the method further comprises:
after accessing a target base station N hops away from the serving base station, receiving a second RRC reconfiguration message sent by the target base station N hops away from the serving base station, wherein the second RRC reconfiguration message comprises RRC configurations and CHO execution conditions of a plurality of candidate target base stations that are N + 1 to M hops away from the serving base station, N + 1 < M ≤ T, and M is a positive integer; and
determining a target base station based on the second RRC reconfiguration message.

5. The method according to any one of claims 1 to 4, wherein after the performing handover to the target base station, the method further comprises:
receiving a first message sent by the target base station, to perform, based on the first message, handover to a subsequently determined target base station to be handed over to, wherein the first message comprises at least one of the following: a trigger moment, a trigger condition, a leave condition, or signal strength of the target base station.

6. A conditional handover CHO method, comprising:
sending handover request messages to a plurality of candidate target base stations based on a moving path, wherein the moving path is a specified path on which movement is to be performed, the plurality of candidate target base stations comprise base stations 1 to N hops away from a serving base station, 1 < N ≤ T, T is a hop count from a farthest base station to the serving base station on the moving path, and N and T are positive integers;
receiving handover request responses, wherein the handover request responses comprise radio resource control RRC configurations of the plurality of candidate target base stations; and
sending a first RRC reconfiguration message to a terminal, wherein the first RRC reconfiguration message comprises the RRC configurations and obtained CHO execution conditions of the plurality of candidate target base stations.

7. The method according to claim 6, wherein the handover request message carries the moving path.

8. The method according to claim 7, wherein
the handover request responses further comprise the CHO execution conditions of the plurality of candidate target base stations; and
the sending handover request messages to a plurality of candidate target base stations based on a moving path and the receiving handover request responses comprise:
sending the handover request message to a candidate target base station one hop away from the serving base station on the moving path;
receiving a handover request response sent by the candidate target base station one hop away from the serving base station, wherein the handover request response comprises an RRC configuration of the candidate target base station one hop away from the serving base station, and an RRC configuration and a CHO execution condition that are of a candidate target base station capable of serving the terminal on the moving path and that are received by the candidate target base station one hop away from the serving base station; and
correspondingly adding a CHO execution condition from the serving base station to the candidate target base station one hop away, and the received RRC configuration and CHO execution condition, to obtain the first RRC reconfiguration message.

9. The method according to claim 6 or 7, wherein
the handover request responses further comprise the CHO execution conditions of the plurality of candidate target base stations; and
the sending handover request messages to a plurality of candidate target base stations based on a moving path and the receiving handover request responses comprise:
generating at least one service sequence based on a service sequence of the plurality of candidate target base stations that serve the terminal on the moving path;
sending, based on the service sequence, the handover request message to a candidate target base station one hop away from the serving base station, wherein the handover request message carries a service sequence corresponding to the candidate target base station one hop away from the serving base station;
receiving the handover request response sent by the candidate target base station one hop away from the serving base station, wherein the handover request response comprises an RRC configuration of the candidate target base station one hop away from the serving base station, and an RRC configuration and a CHO execution condition of a candidate target base station in the service sequence received by the candidate target base station one hop away from the serving base station; and
correspondingly adding a CHO execution condition from the serving base station to the candidate target base station one hop away, and the received RRC configuration and CHO execution condition, to obtain the first RRC reconfiguration message.

10. The method according to claim 6 or 7, wherein the sending handover request messages to a plurality of candidate target base stations based on a moving path comprises:
obtaining, through calculation based on the moving path, the plurality of candidate target base stations capable of serving the terminal; and
sending the handover request messages to the plurality of calculated candidate target base stations.

11. The method according to claim 7, wherein the sending handover request messages to a plurality of candidate target base stations based on a moving path and the receiving handover request responses sent by the plurality of candidate target base stations comprise:
sending the handover request messages to the plurality of candidate target base stations based on the moving path; and
receiving the handover request responses sent by the plurality of candidate target base stations capable of serving the terminal, wherein whether the plurality of candidate target base stations are capable of serving the terminal is determined by the plurality of candidate target base stations based on the moving path.

12. The method according to claim 10 or 11, wherein before the sending a first RRC reconfiguration message to a terminal, the method further comprises:
adding the CHO execution conditions corresponding to the RRC configurations of the plurality of candidate target base stations, to obtain the first RRC reconfiguration message.

13. The method according to any one of claims 6 to 9, wherein
the handover request message carries a preset hop count, the preset hop count is reduced by one each time the preset hop count is received by one candidate target base station, and when the preset hop count is reduced to zero, the candidate target base station no longer sends a handover request message to a next-hop candidate target base station, and sends the handover request response to a previous-hop base station; or if the candidate target base station fails to find an eligible next-hop candidate target base station, the preset hop count returns to zero, so that the candidate target base station sends the handover request response to the previous-hop base station.

14. The method according to any one of claims 6 to 9, wherein
the handover request message carries an estimated timeout moment, so that the candidate target base station compares a receiving moment of receiving the handover request message by the candidate target base station with the estimated timeout moment, and if the receiving moment exceeds the estimated timeout moment, the candidate target base station confirms timeout, no longer sends a handover request message to a next-hop candidate target base station, and sends the handover request response to a previous-hop base station; or when the receiving moment does not exceed the estimated timeout moment and the candidate target base station fails to find an eligible next-hop candidate target base station, the candidate target base station sends the handover request response to the previous-hop base station.

15. The method according to any one of claims 6 to 14, wherein after the sending a first RRC reconfiguration message to a terminal, the method further comprises:
if a successful handover message sent by a target base station is received, determining that the terminal has been handed over to the target base station; and
sending a second message to the target base station, so that the target base station determines, based on the second message, a candidate target base station to which the terminal subsequently is handed over on the moving path, wherein the second message comprises an ID of the candidate target base station to which the terminal subsequently is handed over and RRC configuration information provided for the terminal.

16. The method according to claim 15, wherein the RRC configuration information provided for the terminal is obtained based on the RRC configuration in the handover request response.

17. A conditional handover CHO method, comprising:
receiving a handover request message, wherein the handover request message is sent based on a moving path, and the moving path is a specified path on which movement is to be performed;
generating a handover request response for the handover request message, wherein the handover request response comprises at least one radio resource control RRC configuration; and
sending the handover request response.

18. The method according to claim 17, wherein
the handover request message carries the moving path; and
the receiving a handover request message, the generating a handover request response for the handover request message, and the sending the handover request response comprise:
receiving the handover request message sent by a previous-hop base station, wherein the previous-hop base station is a serving base station or a candidate target base station;
if it is determined, based on the moving path, that a service can be provided for a terminal, determining a next-hop candidate target base station based on the moving path, and sending the handover request message to the next-hop candidate target base station;
if a handover request response sent by the next-hop candidate target base station is received, correspondingly adding, based on the next-hop handover request response and an RRC configuration of a candidate target base station, a CHO execution condition from the candidate base station to the next-hop candidate target base station, to obtain the handover request response; or
if no handover request response fed back by the next-hop candidate target base station is received, obtaining the handover request response based on the RRC configuration of the candidate base station; and
sending the handover request response to the previous-hop base station.

19. The method according to claim 17, wherein
the handover request message carries a service sequence generated by a serving base station based on the moving path; and
the receiving a handover request message, the generating a handover request response for the handover request message, and the sending the handover request response comprise:
receiving the handover request message sent by a previous-hop base station, wherein the previous-hop base station is the serving base station or a candidate target base station;
determining a next-hop candidate target base station based on the service sequence, and sending the handover request message to the next-hop candidate target base station;
if a next-hop handover request response sent by the next-hop candidate target base station is received, correspondingly adding, based on the next-hop handover request response and an RRC configuration of a candidate base station, a CHO execution condition from the candidate base station to the next-hop candidate target base station, to obtain the handover request response; or
if no next-hop handover request response fed back by the next-hop candidate target base station is received, obtaining the handover request response based on the RRC configuration of the candidate base station; and
sending the handover request response to the previous-hop base station.

20. The method according to claim 17, wherein
the handover request message carries the moving path; and
the receiving a handover request message, the generating a handover request response for the handover request message, and the sending the handover request response comprise:
receiving the handover request message sent by a serving base station;
if it is determined, based on the moving path, that a capability of serving a terminal is available, obtaining the handover request response based on an RRC configuration of a candidate base station; and
sending the handover request response to the serving base station.

21. The method according to any one of claims 17 to 19, wherein after the receiving the handover request message sent by a previous-hop base station, the method further comprises:
if it is determined that there is no next-hop candidate target base station that meets a handover condition, generating the handover request response, wherein the handover request response comprises the RRC configuration of the candidate base station.

22. The method according to any one of claim 17, 18, 19 or 21, wherein the sending the handover request message comprises:
if the handover request message carries a preset hop count, and the preset hop count is not zero after the handover request message is received, sending the handover request message to the next-hop candidate target base station, wherein the preset hop count is reduced by one each time the preset hop count is received by one candidate target base station; or
if the handover request message carries an estimated timeout moment and a receiving moment of receiving the handover request message does not exceed the estimated timeout moment, sending the handover request message to the next-hop candidate target base station.

23. The method according to any one of claim 17, 18, 19, or 21, wherein
the handover request message carries a preset hop count, and
after the receiving a handover request message, the method further comprises:
if the preset hop count is zero after the handover request message is received, generating the handover request response, wherein the handover request response comprises the RRC configuration of the candidate base station; or
if the preset hop count is not zero after the handover request message is received, and it is determined that there is no next-hop candidate target base station that meets a handover condition, returning the preset hop count to zero, and generating the handover request response; or
the handover request message carries an estimated timeout moment; and
after the receiving a handover request message, the method further comprises:
if a receiving moment of receiving the handover request message exceeds the estimated timeout moment, generating the handover request response; or
if the receiving moment does not exceed the estimated timeout moment, and it is determined that there is no next-hop candidate target base station that meets a handover condition, generating the handover request response.

24. The method according to claim 23, wherein
the handover request message carries the moving path on which a terminal moves; and
after the sending the handover request response, the method further comprises:
if the terminal performs accessing, sending a successful handover message to a next-hop target base station on the moving path, wherein the successful handover message indicates that the terminal has completed the accessing; and determining, based on the moving path, the next-hop target base station as a base station that the terminal is to access.

25. The method according to claim 24, wherein after the sending the handover request response, the method further comprises:
if the successful handover message sent by a previous-hop target base station is received, and the preset hop count is zero or the receiving moment exceeds the estimated timeout moment, sending handover request messages to a plurality of candidate target base stations based on the moving path, wherein the plurality of candidate target base stations comprise base stations that are N + 1 to M hops away from the serving base station, N + 1 < M ≤ T, T is a hop count from a farthest base station to the serving base station on the moving path, and N, M, and T are positive integers;
receiving handover request responses, wherein the handover request responses comprise RRC configurations and CHO execution conditions of a plurality of candidate target base stations that are N + 2 to M hops away from the serving base station, and an RRC configuration of at least one candidate target base station N + 1 hops away from the serving base station;
correspondingly adding, to the RRC configuration of the at least one candidate target base station N + 1 hops away from the serving base station, a CHO execution condition of handover to the candidate base station;
obtaining a second RRC reconfiguration message based on the RRC configuration and the CHO execution condition; and
if the terminal performs accessing, sending the second RRC reconfiguration message to the terminal.

26. The method according to any one of claims 17 to 25, wherein after the sending the handover request response, the method further comprises:
if a second message is received, determining the next-hop candidate target base station based on the second message, wherein the second message comprises an ID of a candidate target base station to which the terminal subsequently is handed over and RRC configuration information provided for the terminal; and
sending, to the terminal, a first message updated based on the second message, wherein the first message comprises at least one of the following: a trigger moment, a trigger or leave condition, or signal strength of a target base station.

27. The method according to claim 26, wherein the RRC configuration information provided for the terminal is obtained based on the RRC configuration in the handover request response.

28. A terminal device, wherein the terminal device comprises a processor and a memory; and
the memory is configured to store computer instructions, and when the processor executes the computer instructions, the remote terminal device is enabled to perform the method according to any one of claims 1 to 5.

29. A serving base station, wherein the serving base station comprises a processor and a memory; and
the memory is configured to store computer instructions, and when the processor executes the computer instructions, the first network node is enabled to perform the method according to any one of claims 6 to 16.

30. A candidate target base station, wherein the candidate target base station comprises a processor and a memory; and
the memory is configured to store computer instructions, and when the processor executes the computer instructions, the relay terminal device is enabled to perform the method according to any one of claims 17 to 27.

31. A communication system, comprising:
the terminal device according to claim 28;
the serving base station according to claim 29; and
at least one candidate target base station according to claim 30.
